Europäisches Patentamt

European Patent Office

Office européen des brevets

(11) Numéro de publication: **0 415 822 B1**

(12) **FASCICULE DE BREVET EUROPEEN**

(45) Date de publication de fascicule du brevet: **12.07.95**　(51) Int. Cl.6: **B01D 15/02**, B01D 15/08

(21) Numéro de dépôt: **90402335.5**

(22) Date de dépôt: **22.08.90**

Le dossier contient des informations techniques présentées postérieurement au dépôt de la demande et ne figurant pas dans le présent fascicule.

(54) **Procédé continu et dispositif de séparation chromatographique d'un mélange d'au moins trois constituants en trois effluents purifiés au moyen d'un seul solvant à deux températures et/ou à deux pressions différentes.**

(30) Priorité: **28.08.89 FR 8911365**

(43) Date de publication de la demande:
**06.03.91 Bulletin 91/10**

(45) Mention de la délivrance du brevet:
**12.07.95 Bulletin 95/28**

(84) Etats contractants désignés:
**DE ES GB IT NL**

(56) Documents cités:
**EP-A- 0 290 684**
**FR-A- 2 274 331**
**US-A- 3 728 843**
**US-A- 4 498 991**

(73) Titulaire: **INSTITUT FRANCAIS DU PETROLE**
**1 et 4 Avenue de Bois-Préau**
**BP 311**
**F-92506 Rueil Malmaison Cédex (FR)**

(72) Inventeur: **Hotier, Gérard**
**13, rue Michelet**
**F-92500 Rueil-Malmaison (FR)**
Inventeur: **Toussaint, Jean Michel**
**18 bis, rue du R.P. Christian Gilbert**
**F-92600 Asnières (FR)**
Inventeur: **Lonchamp, Daniel**
**27, Montée de Verdun**
**F-69160 Tassin la Demi Lune (FR)**
Inventeur: **Terneuil, Gabriel**
**3, rue Tarillon**
**F-38000 Grenoble (FR)**

Rank Xerox (UK) Business Services
(3.10/3.09/3.3.3)

## Description

La présente invention concerne un procédé et un dispositif de séparation en continu, en phase fluide (liquide, vapeur ou supercritique) de trois ou de plus de trois composants d'un mélange fluide (liquide, vapeur ou supercritique) à l'aide de particules solides ou d'un gel perméable semi-solide capables d'adsorber de manière sélective au moins deux composés du mélange dont l'un très fortement de sorte qu'une simple élution soit particulièrement peu indiquée pour le désorber. Plus particulièrement, elle concerne 1) l'application de la technique dite "du contre-courant simulé" aux séparations réalisées jusqu'à présent par chromatographie préparative en gradient d'élution qui se rencontrent par exemple en chimie pharmaceutique en chimie fine ou en biochimie. Elle concerne également 2) les domaines d'application classiques du procédé de séparation en continu en phase liquide utilisant le système du contre-courant simulé à condition que les charges renferment au moins trois constituants, par exemple dans le cas de la coupe $C_8$ aromatique, il peut être intéressant de séparer en une seule opération continue du paraxylène, de l'éthylbenzène et un mélange ortho et métaxylène. Un autre exemple est constitué par le mélange Xylose Arabinose Glucose 3) les domaines d'application encore embryonnaires de la chromatographie supercritique préparative tels que production d'aromes et d'huiles essentielles.

Plus généralement cette technique s'applique lorsque l'on a affaire à au moins trois produits non séparables par distillation, soit parce que leurs points d'ébullition sont trop proches, soit parce qu'ils sont thermiquement instables.

La plupart des appareillages d'adsorption de gros tonnages comportant un adsorbant solide, utilisés par exemple pour le séchage des gaz, l'adsorption d'une substance organique, la séparation de n-paraffines en phase gazeuse ou la production d'hydrogène par à-coups de pression sont utilisés suivant la technique consistant à employer plusieurs lits d'adsorption comportant les particules adsorbantes solides pour réaliser une adsorption, une désorption et une régénération en phase gazeuse. Cependant il est plus difficile d'utiliser cette technique en phase liquide car même lors de la phase de sorption il reste une fraction importante de charge non adsorbée dans l'espace interparticulaire de la phase de sorption et dans la macroporosité des particules. Dans ces conditions il est très difficile d'obtenir le produit désiré avec à la fois un bon rendement, une bonne pureté et à un coût énergétique intéressant.

Pour remédier à cet inconvénient on peut procéder soit en augmentant le nombre de réacteurs de manière à pouvoir faire des purges qui sont ensuite recyclées soit à des balayages par un autre composé en principe non ou peu adsorbable. Ceci présente l'inconvénient évident de compliquer la procédure et d'augmenter le coût de la distillation subséquente. On conçoit donc facilement qu'un procédé séquentiel de sorption désorption où le mélange d'alimentation liquide présente, soit un faible facteur de séparation, soit encore un corps très fortement retenu par l'adsorbant, ne puisse conduire à des effluents à la fois de bonne pureté et de concentration élevée.

Dans le cas où l'on ne désire séparer que deux effluents distincts les procédés basés sur le "contre-courant simulé" tel que décrit dans les brevets US 2 985 589, 3 696 107, 3 706 812, 3 761 533 ou dans le brevet français 2 103 302 se révèlent être efficaces puisqu'ils permettent d'arriver à produire en continu des effluents à la fois de bonne pureté et en solution concentrée dans le désorbant. Selon le brevet US 4 306 107 il est décrit un procédé de séparation en continu d'un mélange à quatre constituants : le méta-xylène, l'orthoxylène, le paraxylène et l'éthylbenzène par la technique du contre-courant simulé en présence d'un solvant, le toluène. Trois fractions sont obtenues : la première contenant le métaxylène pur récupéré à 100 %, la troisième contenant de l'éthylbenzène pur récupéré seulement à 60 % et la seconde comprenant un mélange de para- et d'ortho-xylène récupérés à 100 % mais aussi d'éthylbenzène représentant 40 % de la quantité initiale. Ce procédé présente donc l'inconvénient d'une récupération partielle du produit le moins adsorbé et de la récupération d'un mélange au niveau de la fraction intermédiaire.

Pour les appareils d'adsorption de petit tonnage avec lesquels on fabrique quelques kilos à la fois de produits à haute valeur ajoutée le problème est en général très différent du précédent. Il arrive assez souvent que l'on cherche à isoler un produit pur particulier, peu concentré, au sein d'un mélange d'au moins une dizaine de corps purs, produits par exemple, lors de la dernière étape d'une synthèse. Les modes de production sont plutôt discontinus, et le coût de la séparation solvant-produit purifié n'intervient que peu dans le prix de revient final. La technique de séparation utilisée vise donc essentiellement à séparer le produit recherché avec tout d'abord un bon rendement puis une bonne pureté, l'aspect concentration dans le ou les solvants de séparation n'étant, soit pas du tout, soit très peu pris en compte. La technique du gradient d'élution quoique complexe est souvent utilisée dans la pratique. Elle consiste à envoyer une charge complexe sur la colonne puis à éluer par un premier solvant qui, ne présentant que peu d'affinité pour la phase fixe, ne déplace notablement que les corps peu retenus par cet adsorbant. Au cours de l'avancement de cette opération on remplace peu à peu ce premier solvant par un second qui présente une très forte affinité pour l'adsorbant et qui donc déplace quasiment tous les corps contenus dans la charge comme s'ils n'étaient pas du tout retenus par l'adsorbant. C'est donc la variation progressive et continue du pouvoir solvant et de l'affinité de l'éluant dans la colonne qui produit une élution graduelle des différents produits de la charge. Le produit recherché sera donc recueilli sous forme d'une fraction particulière du courant élué. La phase suivante consiste à reconditionner la colonne par le premier des deux solvants. De plus, périodiquement la colonne doit être régénérée, parce que les phases fixes utilisées sont souvent sensibles à l'empoisonnement par des traces de certains corps contenus dans la charge ou l'un ou l'autre des deux solvants. La technique du gradient d'élution est susceptible de fonctionner selon plusieurs principes physiques employés en chromatographie liquide, on peut notamment citer :

1) La chromatographie par perméation de gel qui fonctionne suivant le principe d'exclusion : les grosses molécules incapables d'entrer dans les cavités du gel sont éluées en premier tandis que les plus petites transitant par toutes les cavités disponibles sont éluées en dernier. Le gradient d'élution peut modifier le phénomène de deux manières :

a) en agissant sur les molécules de la charge : par une solvatation de plus en plus forte. Des molécules de rayon de gyration au départ identique, en conformation de type pelote "statistique" se solvateront et se déplieront différemment suivant leur fonctionnalité ;

b) en agissant sur la phase fixe : par un gonflement progressif du gel ; on restreindra progressivement la taille des cavités en ne retenant que des molécules de plus en plus petites.

2) La chromatographie en phase inverse qui joue sur le coefficient de partage des solutés entre une phase aqueuse et une phase organique. Un exemple connu contribue à séparer un mélange de produits organiques peu solubles dans l'eau sur une silice greffée $C_{18}$ au moyen d'un gradient eau-méthanol. Au fur et à mesure que la concentration en méthanol dans la phase mobile augmente les produits les plus liposolubles se détachent petit à petit de la phase fixe.

3) La chromatographie d'affinité qui fonctionne soit sur les liaisons de type Van der Waals soit sur les liaisons "hydrogène" entre soluté et phase fixe. Lorsque l'on remplace un solvant apolaire type hydrocarbure par un solvant polaire type chlorure de méthylène ou chloroforme on arrive à éluer des solutés de plus en plus polaires.

La technique du gradient d'élution n'implique pas forcément d'employer deux solvants différents. On peut fonctionner en gradient de pH où les deux solvants sont remplacés par deux solutions tamponnées. On peut également fonctionner en gradient de pression (un seul solvant supercritique) avec l'appoint d'un "entraîneur" en général sous forme de traces (jusqu'à 3 %).

La variété des phases fixes et des couples de solvants est telle que la majorité des séparations réputées impossibles il y a 25 ans sont aujourd'hui réalisées. A titre d'exemple on peut citer la résolution d'énantiomères ou de mélanges racémiques (avec des phases fixes optiquement actives) "Preparative separation of enantiomers on axially compressed column" K.H. Rimböck, F. Kastner, A. Mannschreck, Journal of Chromatography n° 329 (1985) p. 307-310.

Ces méthodes présentent le désavantage de ne pas être continues bien qu'automatisables, Réf. J. Krohn, F. Verillon (international laboratory octobre 1986). Elles sont conçues pour produire tout au plus quelques dizaines de kilogrammes par an, avec un appareillage très souple et versatile susceptible de servir à de nombreuses séparations différentes suivant la demande.

L'art antérieur est décrit également par le brevet US 4,498,991 qui concerne un lit mobile simulé à co-courant. Il est possible selon ce document d'obtenir deux fractions à partir d'un mélange contenant trois composés ou plus de sorte que, pour rendre possible une séparation multi constituants, il faut mettre en oeuvre une unité de séparation par constituant à séparer, ce qui est particulièrement coûteux en investissement et en solvants utilisés. Selon un autre brevet FR 2.274.331, il est aussi possible par l'introduction de deux ou trois courants de solvants de force différente dans un appareillage à contre-courant simulé, d'aboutir à la séparation d'un mélange conduisant à un seul effluent de bonne pureté qui ne peut être que le produir le plus fortement ou le plus faiblement adsorbé.

L'objet de la présente invention est de remédier aux inconvénients précités. Notamment, un des objets de l'invention est l'obtention, à partir d'un mélange d'au moins trois constituants, de trois fractions (chacune d'elles contenant au moins un constituant, le ou les constituants de chaque fraction étant récupérés avec un bon rendement pouvant aller jusqu'à 100 %).

Un autre objet est d'obtenir une fraction intermédiaire entre la fraction de tête et la fraction de queue pouvant contenir un mélange de produits récupérés sensiblement à 100 %.

Un autre objet est d'obtenir une fraction intermédiaire pouvant ne contenir qu'un seul constituant récupéré sensiblement à 100 %.

Un autre objet est de mieux intégrer les phases de purge dans les procédés cycliques en produisant ou en recyclant au traitement une fraction intermédiaire.

L'invention a pour objet en bref de séparer en continu avec un haut degré de pureté et en concentration élevée une charge constituée d'un mélange d'au moins trois produits en trois effluents distincts avec :

1) une efficacité et une simplicité plus grandes que la simple association en série de deux unités classiques de contre-courant simulé :

2) une consommation de solvant très réduite et une quantité de phase fixe plus faible qu'avec une séparation discontinue isocratique ou en gradient d'élution.

En d'autres termes l'invention a pour objet de séparer un mélange d'au moins trois constituants en trois fractions en réunissant en un seul procédé fonctionnant en continu les techniques du gradient d'élution à un seul solvant et du contre-courant simulé classique avec recirculation continue du liquide selon US-A-2985589 sans que l'invention ne puisse être considérée comme une simple juxtaposition de deux étapes distinctes.

Un autre objet de l'invention est d'apporter une amélioration substantielle au contre-courant simulé classique (où seuls deux effluents : un raffinat et un extrait sortent de l'unité). Il arrive en effet assez souvent que la charge contienne des traces d'un produit très fortement adsorbé sur la phase fixe. Il en résulte une accumulation qui fait baisser progressivement les performances de l'unité et nécessite à la longue un arrêt pour régénérer l'adsorbant. Grâce à l'invention on peut éviter ces arrêts soit en régénérant en continu, soit de préférence en appliquant périodiquement une séquence de régénération qui ne stoppe pas pour autant la production.

L'invention concerne d'une part un procédé de séparation en continu et en phase fluide d'un mélange ou charge, d'au moins trois constituants en trois fractions, selon la revendication 1, d'autre part un dispositif de mise en oeuvre de ce procédé selon la revendication 8.

En opérant ainsi, on récupère sensiblement tout le solvant fort du volume intergrain du sorbant et on évite de polluer la zone 6 d'adsorption du constituant le plus adsorbé, par du solvant faible.

Plus précisément, on introduit en continu, en phase liquide, vapeur ou supercritique :

1) deux mêmes fluides désorbants qui diffèrent par leurs propriétés physiques (température ou pression) de même nature chimique ou de composition sensiblement identique lorsqu'il s'agit de mélanges, et qui présentent des affinités différentes pour la phase fixe de contact définie plus bas (sorbant). On parle alors de solvant fort $S_2$ et de solvant faible $S_1$ ; S étant le même solvant ;

2) un mélange d'alimentation qui contient au moins trois constituants dont deux au moins sont adsorbés de manière largement différente par la phase fixe de contact définie plus bas. Ces trois flux sont mis en contact avec des particules de sorbant et circulent à travers les zones définies ci-dessus.

Par solvant fort $S_2$ ou solvant faible $S_1$, on entend en général deux solvants de même nature chimique ou de même composition lorsqu'il s'agit de mélange mais utilisés soit à des températures différentes, soit à des pressions différentes, Il serait aussi possible d'opérer avec un solvant à des températures et à des pressions différentes.

Le solvant dit fort $S_2$ sera le solvant utilisé à une température plus élevée ou à une pression plus élevée,

Le solvant ou désorbant utilisé est judicieusement choisi en fonction du type d'adsorbant, de la séparation des constituants à effectuer et de la séparation ultérieure, distillation par exemple, entre le solvant et les constituants.

Le solvant peut être choisi par exemple parmi les solvants organiques, l'eau, le dioxyde de carbone.

Ce solvant, dans la dénomination solvant dit fort $S_2$ est généralement utilisé à une température supérieure d'au moins 10°C et avantageusement de 20 à 50°C à celle du même solvant dit faible $S_1$. Selon l'invention, le solvant $S_2$ peut aussi être utilisé à une pression supérieure d'au moins 1 MPa et avantageusement supérieure de 2 à 20 MPa à celle du même solvant dit faible $S_1$.

Le solvant est en général miscible avec le mélange. On ne rencontrera habituellement qu'une seule phase à la fois dans l'espace interparticulaire du sorbant. Mais on peut rencontre, par exemple un mélange diphasique fluide.

Ce sorbant (adsorbant, absorbant ou gel) est judicieusement choisi en fonction de la séparation des constituants à réaliser dans un milieu solvant donné. Il est généralement choisi dans le groupe parmi les zéolithes naturelles ou synthétiques, les charbons actifs, les silices, les silice-alumines éventuellement greffées, les argiles éventuellement pontées, les polymères et copolymères éventuellement fonctionnalisés tels que le gel de polystyrène réticulé au divinylbenzène et par exemple sulfoné, les résines échangeuses d'ions, et leurs mélanges.

La granulométrie est habituellement comprise entre 1 micromètre et 1 cm et de préférence comprise entre 5 micromètres et 1 millimètre. Elle est généralement choisie, de manière à réaliser un compromis optimal entre la séparation et la perte de charge admissible. La forme des particules de sorbant peut être quelconque et de préférence sphérique.

La température et la pression de la séparation sont généralement celles comprises sensiblement entre la température et la pression d'utilisation du solvant fort $S_2$ et la température de la pression d'utilisation du solvant faible $S_1$.

Chaque zone est constituée d'au moins une section, de préférence de plusieurs sections (3 à 6) d'égal volume reliées en série, chaque section étant remplie d'une masse de particules d'un sorbant solide ou d'un gel.

Selon le principe du contre-courant simulé en général, le temps est divisé en cycles définis comme le temps au bout duquel la configuration de l'unité se retrouve exactement à l'identique. Chaque cycle est divisé en autant de périodes que l'unité comporte de sections. Chaque période définit le temps s'écoulant entre les permutations de section d'une zone à l'autre.

A chaque période, l'unité se retrouve homothétique à elle-même : le nombre de sections dans chaque zone restant constant, tandis que les points d'introduction et de prélèvement se déplacent d'une section. Pendant chaque période les débits à l'intérieur de chaque zone restent constants.

Selon le principe particulier de l'invention chaque période est en outre divisée en deux ou trois étapes, chaque étape étant définie comme un temps pendant lequel tous les débits restent constants - étant entendu que dans deux zones successives les débits sont en général différents.

Les conditions d'adsorption et les conditions de désorption selon le procédé de l'invention mettent en jeu en général des débits d'alimentation et de soutirage mis en oeuvre par des moyens de régulation de ces débits, tels que les fronts d'élution se déplacent dans les différentes zones de l'amont vers l'aval de la colonne (direction de l'écoulement) avec sensiblement la même vitesse.

Selon un mode préferré de l'invention avec solvant à températures différentes, on peut alimenter les différentes zones et récupérer les différents effluents de la façon suivante :

a) On alimente la zone (6) durant une première étape avec un débit $d_3 = d_1 + d_2$ avec $d_1$ étant le débit du courant de recyclage issu de la zone 2 et $d_2$ étant le débit d'alimentation en solvant fort $S_2$, puis durant une deuxième étape avec un débit $d_3$, de solvant fort $S_2$ sensiblement identique au débit lors de la première étape, et on récupère durant la première étape du solvant faible que l'on envoie dans un réservoir de stockage et durant une seconde étape, on récupère l'extrait $E_2$ au solvant fort que l'on sépare de façon à obtenir le ou les constituants les plus adsorbés.

b) On alimente la zone (5) durant une première étape avec un débit $d_5$ tel que $d_5 < d_3$ d'une partie au moins du solvant faible provenant du réservoir ci-dessus et durant la seconde étape, on alimente la zones (5) avec un débit $d_1$ du courant de recyclage issu de la zone 2 et avec un débit $d_4$, tel que $d_4 = d_5 - d_1$, de la partie restante de solvant faible issue du réservoir de stockage puis éventuellement de solvant faible supplémentaire, et on récupère l'extrait $E_1$ au solvant faible avec un débit $d_6$ tel que $d_6 < d_5$, que l'on sépare de façon à obtenir le ou les constituants moyennement adsorbés.

c) On alimente la zone (4) en la partie restante du flux issu de la zone (5) avec un débit égal à $d_5 - d_6$ de façon à obtenir en sortie un courant issu de la zone (4) de même débit.

d) On alimente la zone (3) en ledit mélange avec un débit $d_7$ et en ledit courant issu de la zone 4 avec le débit $d_5 - d_6$, soit un débit total $d_5 - d_6 + d_7$ et l'on récupère avec un débit $d_8$ une partie au moins du raffinat R au solvant faible, que l'on sépare de façon à obtenir le ou les constituants les moins adsorbés, le débit $d_8$ étant tel que $d_8 + d_6 = d_4 + d_7$.

e) On alimente la zone 2 en la partie restante issue de la zone 3 avec un débit égal à $d_5 - d_6 + d_7 - d_8$ soit $d_1$ et on récupère avec un débit $d_1$ le courant de recyclage pour alimenter la zone 6, puis la zone 5, comme indiqué dans les étapes a et b.

Selon la complexité du mélange, on choisit le nombre total de sections de colonne. De préférence, ce nombre de sections est compris entre 5 et 24. Les sections de colonne sont en général de même section et de forme cylindrique. Une liaison avantageusement externe relie chaque section et comporte l'ensemble des moyens d'alimentation en solvant et en mélange en aval des moyens anti-retour cités ci-dessus. La liaison comporte l'ensemble des moyens de soutirage ci-dessus en extraits, en raffinat et en courant de recyclage, en amont des moyens anti-retour.

L'invention sera mieux comprise au vu des figures 1,2,3,4,5 et 6 illustrant de manière non limitative le procédé et le dispositif, parmi lesquelles les figures 2, 4 et 5 illustrent plus particulièrement l'invention dans sa variante avec solvant à températures différentes et la figure 6 la variante avec solvant à pressions différentes. Parmi ces figures :

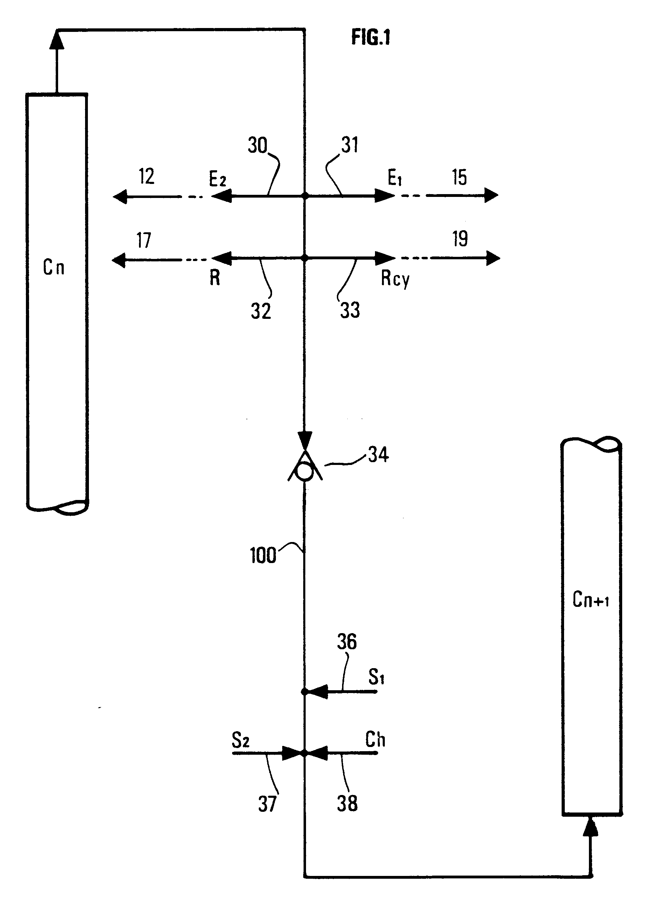

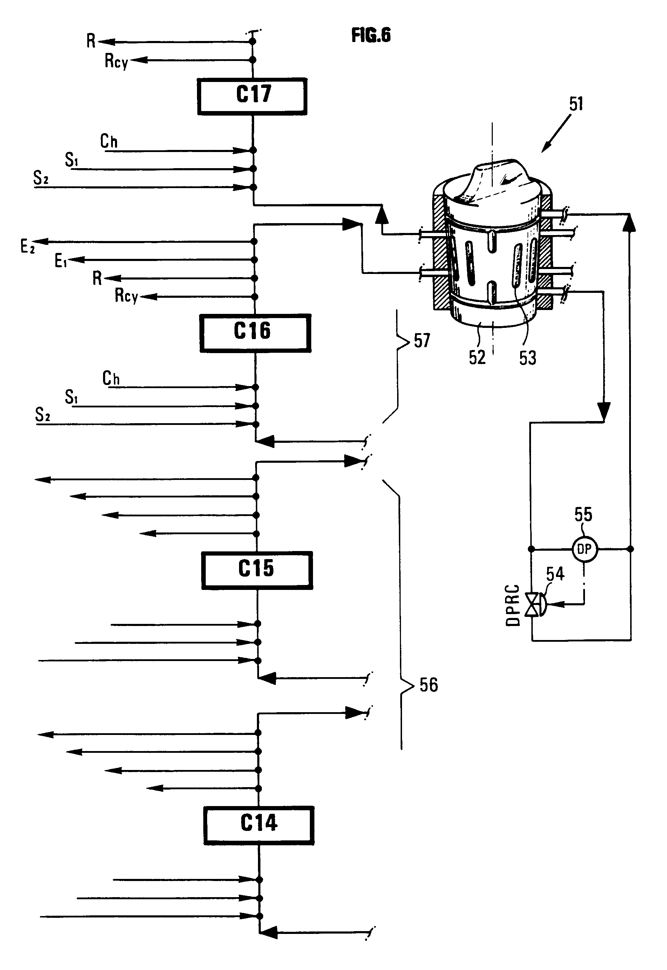

- La figure 1 représente le détail d'agencement entre deux sections successives selon le mode de mise en oeuvre de l'invention qui ne fait pas appel à la figure 6,

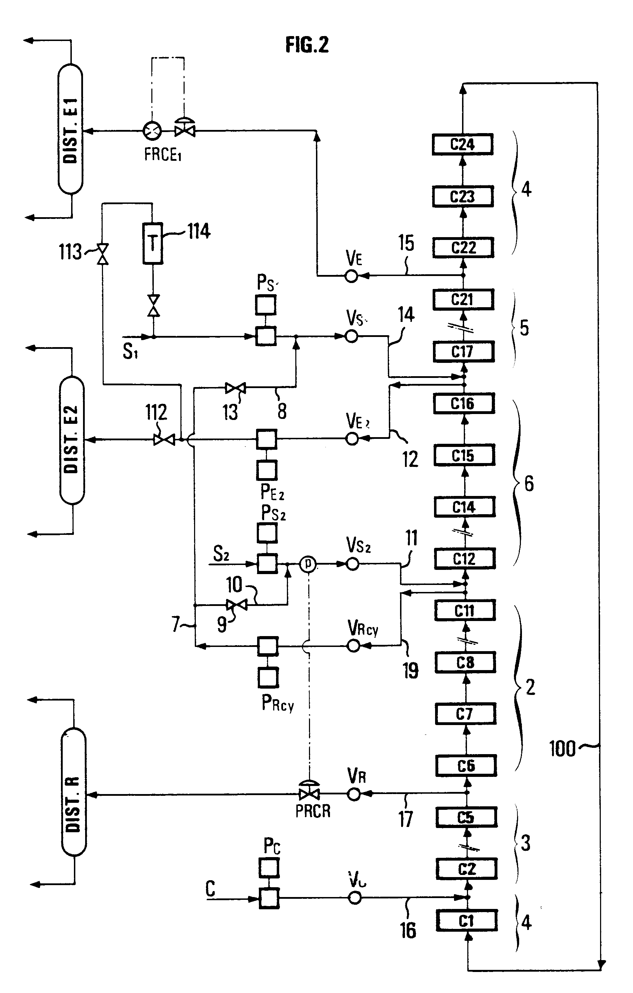

- La figure 2 représente le schéma de principe du mode de mise en oeuvre de l'invention à un instant donné. On représente dans ce schéma 24 sections (5 en zone 6, 5 en zone 5, 4 en zone 4, 4 en zone 3, et 6 en zone 2) ; la douzième période du cycle est désignée arbitrairement comme correspondant à l'introduction de solvant à température élevée donc au début de la zone 6 en section 12.

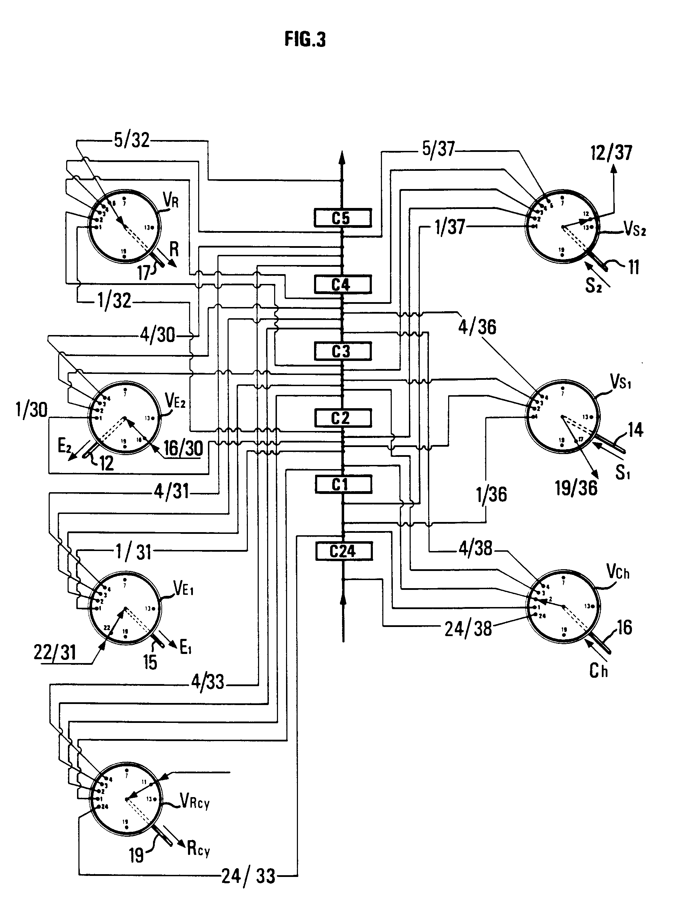

- La figure 3 représente en détail la liaison des différentes sections aux sept vannes tournantes pour la mise en oeuvre de l'invention.

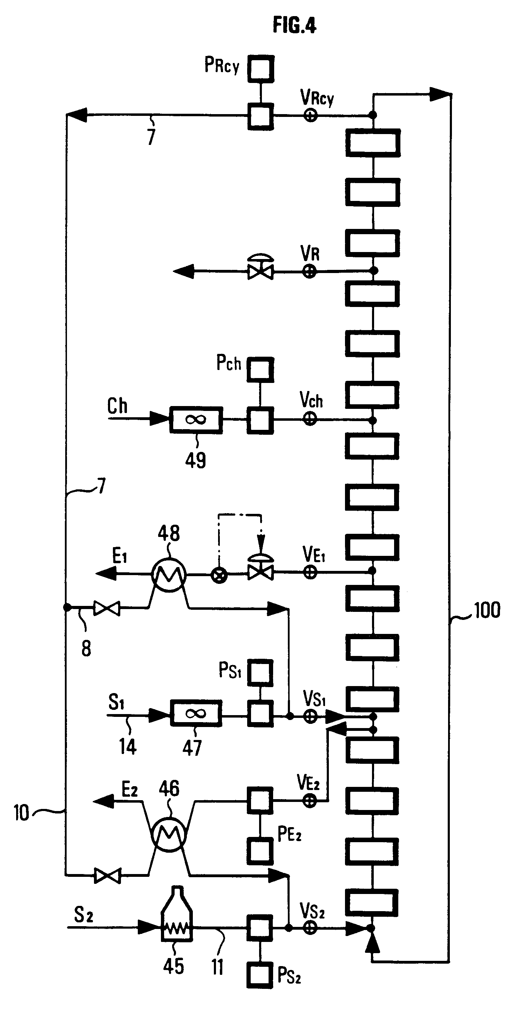

- La figure 4 représente un exemple de mise en oeuvre du procédé avec du solvant chaud ($S_2$) et le même solvant à température plus faible ($S_1$).

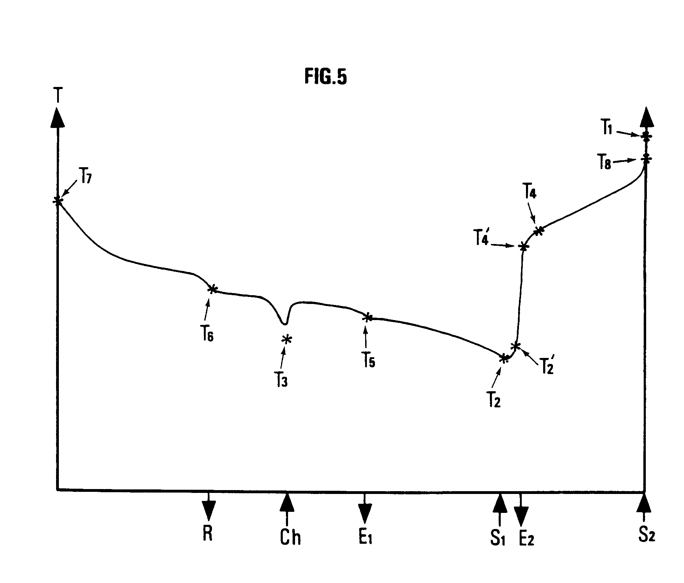

- La figure 5 montre un profil de température dans les différentes zones du dispositif de séparation.
- La figure 6 représente une vanne particulière permettant de travailler à des niveaux de pression substantiellement différents entre deux sections successives par exemple lorsque le solvant fort $S_2$ est un fluide largement supercritique alors que le solvant faible est constitué par le même fluide légèrement sous-critique.

Il va de soi que la figure 2, qui comporte des éléments particulière à la première variante de l'invention (solvant à températures différentes), illustre de manière générale un réalisation d'un contre-courant simulé à cinq zones avec gradient d'élution qui est applicable dans les deux variantes de l'invention.

Comme l'indique la figure 2 qui est relative arbitrairement à la 12ème période du cycle, le système de séparation par sorption selon l'invention comprend essentiellement des colonnes remplies de particules d'adsorbant solide ou de gel d'adsorbant semi-solide est divisé en 5 zones :

- Zone de désorption (6) par le solvant fort du produit le plus fortement adsorbé.
- Zone de désorption (5) par le solvant faible du produit moyennement adsorbé.
- Zone de désorption (4) par le solvant faible et le produit moyennement adsorbé du produit le moins adsorbé.
- Les zones (4) et (5) sont également des zones de rétention du produit le plus fortement adsorbé.
- Zone d'adsorption (3) des produits fortement et moyennement adsorbés,
- Zone d'adsorption ou d'élimination (2) du produit le moins adsorbé, et zone de reconditionnement de colonne ou de désorption du solvant fort par le solvant faible.

Les écoulements des divers fluides sont les suivants :

Zone (6) : - Le solvant fort $S_2$ est pompé par la pompe PS2 ; on ajoute pendant la première étape de la période le courant de recyclage 10, via les lignes 19 et 7, on mesure la pression du courant 11 pour la réguler. Ce flux est envoyé par la vanne VS2 à l'entrée de la section C12.

Lors de la seconde étape de chaque période la vanne 9 est fermée et du solvant fort est envoyé à l'entrée de C12.

- A la sortie de la section C16 sélectionnée par la vanne VE2, la pompe PE2 évacue à travers la ligne 12 dans la première variante de l'invention l'intégralité du flux. Pendant la première étape de la période la vanne 112 est fermée, la vanne 113 est ouverte et ce flux est dirigé vers le réservoir tampon 114 propre à la première variante de l'invention. Pendant la seconde étape de la période, la vanne 113 est fermée, la vanne 112 est ouverte et le flux dirigé vers la distillation DIST. E2 qui sépare le solvant fort du produit le plus fortement adsorbé.

Zone (5) : La pompe PS1 approvisionne pendant une première étape de la période le contenu du réservoir tampon 114 et pendant une seconde étape de la période du solvant faible S1. Pendant la première étape de chaque période la vanne 13 est fermée, alors que pendant la seconde étape de chaque période elle est ouverte et l'on adjoint à la ligne 14 le courant de recyclage 8 issu de la zone (2) via les lignes 19 et 7. L'ensemble du flux de la ligne 14 est orienté par la vanne VS1 vers l'entrée de section C17.

- A la sortie de la section C21 le flux est divisé en deux, une partie transite par la ligne 15 orientée par la ligne VE1 vers la régulation de débit FRCE composée d'une vanne de laminage d'un débitmètre situé en aval et d'une régulation. Ce flux finit dans la colonne à distiller Dist. E1 qui sépare le solvant faible du produit moyennement adsorbé.

Zone (4) : L'autre partie du flux issue de la section C21 s'écoule vers C22, et ressort intégralement de cette zone à la sortie de la section C1.

Zone (3) : A l'intégralité du flux issu de C1 on adjoint par la pompe de charge PC et au moyen de l'orientation de ligne 16 donnée par la vanne VC un courant de charge à l'entrée de la section C2.

A la sortie de la section C5 une partie du flux est prélevée à travers la ligne 17 positionnée par la vanne VR. Ce courant de raffinat est détendu à travers la vanne de régulation de pression PRCR , la pression étant mesurée sur la ligne 11, le flux de raffinat s'évacue vers la distillation Dist R qui sépare le solvant faible du produit peu ou pas adsorbé.

Zone (2) : Elle comprend avantageusement au moins quatre sections. L'autre partie du flux issue de C5 continue en section C6. A la sortie de la section C11 la vanne VRcy oriente la ligne 19 qui permet de prélever l'intégralité du flux issu de la section C11 au moyen de la pompe PRcy. En aval de cette pompe la ligne 7 permet de rejoindre soit la ligne n° 10 pendant la première étape de la période (vanne 9 ouverte, vanne 13 fermée), soit la ligne 8 pendant la seconde partie de la période (vanne 9 fermée, vanne 13 ouverte).

L'agencement des liaisons entre chaque deux sections de la première variante de l'invention est représenté en figure 1, un circuit de régulation (voir Fig.6) devant être mis en oeuvre en amont ou en aval du clapet lorsque l'on opère avec solvant à pressions différentes.

Le deroulement des vingt-quatre periodes du cycle entre les sections C6 et C7 est le suivant :

Période (1) : Jonction C6 - C7 en zone (5) ; l'intégralité du flux transite à travers le clapet anti-retour 34 ; débit nul dans les lignes 30 à 33 et 36 à 38.

Période (2) : Jonction C6 - C7, correspond à la jonction zone (5) zone (6). Selon la première variante de l'invention l'intégralité du flux sortant de la section C6 est prélevée par la ligne 30 qui coïncide alors avec la ligne 12, les débits dans les lignes 31 à 33 et dans le clapet anti-retour sont nuls ; la totalité du flux entrant en section C7 transite par la ligne 36 correspondant alors à la ligne 14, les débits dans les lignes 37 et 38 sont nuls.

Périodes (3 à 6) : Jonction C6 - C7 en zone (6), l'intégralité du flux transite à travers le clapet anti-retour 34, débit nul dans les lignes 30 à 33 et 36 à 38.

Période (7) : Jonction C6 - C7, correspond à la jonction zone (2), zone (6), l'intégralité du flux sortant de la section C6 est prélevée par la ligne 33 qui correspond alors avec la ligne 19, les débits dans les lignes 30 à 32 et le clapet anti-retour 34 sont nuls ; la totalité du flux entrant en section C7 transite par la ligne 37 qui coïncide alors avec la ligne 11, les débits dans les lignes 36 et 38 sont nuls.

Périodes (8 à 12) : Jonction C6 - C7 en zone (2), l'intégralité du flux transite à travers le clapet anti-retour 34, débits nuls dans les lignes 30 à 33 et 36 à 38.

Période (13) : Jonction C6 - C7, correspond à la jonction entre les zones (3) et (2) une partie du courant issu de la section 6 est prélevée par la ligne 32 qui coïncide ainsi avec la ligne 17, les débits dans les lignes 30, 31 et 33 sont nuls, l'autre partie du courant issu de la section C6 transite à travers le clapet anti-retour 34 pour rentrer en section C7 ; les débits dans les lignes 36 à 38 sont nuls.

Périodes (14) à (16) : Jonction C6 - C7 en zone (3), l'intégralité du flux transite à travers le clapet anti-retour 34, débits nuls dans les lignes 30 à 33 et 36 à 38.

Période (17) : Jonction C6 - C7, correspond à la jonction zone (4), zone (3). L'intégralité du flux issu de la section C6 transite à travers le clapet anti-retour 34. Les débits sont nuls dans les lignes 30 à 33. On adjoint à ce flux un courant de charge par la ligne 38 qui coïncide alors avec la ligne 16, les débits dans les lignes 36 et 37 sont nuls.

Périodes (18) à (20) : Jonction C6 - C7 en zone (4). La totalité du flux transite à travers le clapet anti-retour 34 ; débits nuls dans les lignes 30 à 33 et 36 à 38.

Période (21) : Jonction C6 - C7 coïncide avec la jonction zone (5), zone (4). Une partie du courant issu de la section C6 est prélevée par la ligne 31 qui correspond alors à la ligne 15, les débits dans les lignes 30, 32 et 33 sont nuls. L'autre partie de ce courant transite par le clapet anti-retour 34 ; débits nuls dans les lignes 36 à 38.

Périodes (22) à (24) : Jonction C6 - C7 en zone (5). La totalité du flux transite à travers le clapet anti-retour 34 ; débits nuls dans les lignes 30 à 33 et 36 à 38.

A la fin de la vingt-quatrième période le cycle se trouve bouclé, et, le dernier mouvement des vannes VS2, VE2, VS1, VE1, VC, VR et VRcy ramène la jonction C6 - C7 dans sa configuration initiale : c'est le début d'un autre cycle.

La figure 3 représente un schéma détaillé de la liaison des différentes sections avec sept vannes tournantes pour la mise en oeuvre de l'invention. La numérotation des lignes combine celles des figures (1) et (2). Ainsi le prélèvement d'extrait au solvant fort correspond toujours au suffixe 30, le prélèvement d'extrait au solvant faible correspond toujours au suffixe 31, le prélèvement de raffinat correspond toujours au suffixe 32, le prélèvement du courant de recyclage correspond au suffixe 33, l'adjonction de solvant faible correspond toujours au suffixe 36, l'adjonction de solvant fort au suffixe 37, et, enfin l'adjonction du courant de charge au suffixe 38. D'autre part les préfixes indiquent le numéro de la section vers laquelle un courant va rentrer ou de laquelle il est sorti. Par exemple, la ligne 3/36 désigne la liaison entre la vanne de solvant faible VS1 et l'entrée en section C3, la ligne 1/31 désigne la liaison entre la sortie de la section C1 et la vanne d'extrait au solvant faible VE1.

De plus, l'entrée commune de la vanne de charge s'appelle toujours 16, l'entrée commune de la vanne de solvant faible s'appelle toujours 14, l'entrée commune de la vanne de solvant fort s'appelle toujours 11 ; tandis que les sorties communes des vannes de raffinat, d'extrait au solvant fort, d'extrait au solvant faible et de recyclage s'appellent toujours respectivement 17, 12, 15 et 19.

Ainsi, dans les commentaires des figures 1 et 2 lorsque l'on dit qu'en période 13 la jonction C6 - C7 correspond à la jonction zone (3), zone (2) et que de ce fait les lignes 32 et 17 se trouvent en coïncidence il faut comprendre que la vanne VR met en communication les lignes 6/32 et 17 et qu'ainsi la ligne 17 se trouve, pendant le temps de cette 13ème période, prolongée jusqu'à la sortie de la zone 6. D'après cette figure on comprend aisément que pour 24 sections et 7 vannes tournantes 168 lignes de ce type relient chaque section à chaque vanne.

La figure 4 représente un mode préféré de la première variante de l'invention.

La figure 5 représente un exemple de profil de température souhaitable dans les cinq zones caractérisant cette première variante.

La figure 4 montre un four 45, des échangeurs 46 et 48 et des réfrigérants 47 et 49. Le solvant fort S2 et le solvant faible S1 étant de même nature, la seule différence provient des deux températures d'injection $T_1$ et $T_2$ substantiellement différentes avec $T_1 > T_2$.

Pendant la première étape de chaque période rentrent en zone 6 - via la ligne 10 un courant de recyclage issu de la zone (2) initialement à la température $T_7$ (cette température peut être éventuellement régulée par échange de chaleur avec l'extrait 2 (température $T_4$) issu de la zone 6, au moyen de l'échangeur 46) - via la ligne 11 un courant de solvant chauffé par le four 45. La température à la sortie du four 45 doit être telle qu'à l'entrée de la zone 6 la température de la ligne 11, $T_1$ soit assurée de manière stable.

Pendant la seconde étape de chaque période la vanne sur la ligne 10 est fermée et le seul courant de solvant est assuré par la ligne 11. Pendant la totalité de la période le débit et la température à l'entrée de la zone (6) sont maintenus constants.

A la sortie de la zone 6, la température varie constamment tout au long de la période entre $T'_2$ et $T_4$ avec $T'_2 < T_4$, pendant la première étape la température est comprise entre $T'_2$ et

$$T'_2 + \frac{T'_2 + T'_4}{2} \, ,$$

pendant la plus grande partie de cette première étape la température se maintient entre $T'_2$ et

$$\frac{T'_2 + T'_4}{5} \; ;$$

à la fin de la première étape la température augmente très vite de

$$T'_2 + \frac{T'_2 + T'_4}{5}$$

à

$$T'_2 + \frac{T'_2 + T'_4}{2} \, .$$

Pendant toute la première étape le flux issu la zone 6 est envoyé vers la réserve 114, la vanne 113 étant ouverte et la vanne 112 fermée. Pendant la seconde étape de la période, la température du flux issu de la zone (6) vers la ligne 12 passe brusquement de

$$T'_2 + \frac{T'_2 + T'_4}{2}$$

à $T'_4$ puis pendant la plupart de la période la température reste comprise entre $T'_4$ et $T_4$. Pendant cette seconde étape le corps le plus fortement adsorbé ressort de la zone 6, la vanne 113 est fermée, la vanne 112 est ouverte et le solvant est séparé du soluté le plus fortement adsorbé dans la colonne de distillation Dist $E_2$.

Pendant une première partie de la période on introduit en zone 5 le solvant contenu dans la réserve 114 à une température légèrement supérieure à $T'_2$ par la pompe $PS_1$ et la vanne $VS_1$ à travers la ligne 14. Pour ramener la température moyenne de la première section de la zone 5 à $T'_2$, pendant la seconde partie de la période on introduit du solvant refroidi par le réfrigérant 47 à la température $T_2$. Pendant toute la durée de la période le débit à l'entrée de la zone (5) est maintenu constant. A la sortie de la zone (5) une partie du flux est prélevée via la ligne 15, la vanne VE1 et l'ensemble de régulation de débit FRCE1 et envoyé vers la distillation Dist $E_1$ où le solvant et le soluté moyennement adsorbés sont séparés.

La seconde partie du flux issu de la zone 5, circule vers la zone (4), sa température est $T_5$, avec $T_5$ légèrement supérieure à $T'_2$. A la sortie de la zone 4, l'intégralité du flux est envoyée vers la zone (3). On y adjoint au moyen de la pompe de charge PC et de la vanne VC via la ligne 16 de la charge à la température $T_3$ tel que $T_5 > T_3 > T'_2$. A la sortie de la zone (3) via la ligne 17 on prélève au moyen de la vanne VR et du dispositif de régulation de pression PRC R une partie du flux issu de la zone (3) pour l'envoyer vers la distillation Dist R où le solvant et le soluté peu ou pas adsorbé sont séparés. La seconde partie de ce flux continue vers la zone (2) où la température s'élève de $T_6$ à $T_7$ puisque la température dans la dernière section de la zone 2 est initialement $T_8$ avec $T_8$ légèrement inférieure à $T_1$.

La figure 6 représente un boisseau de vanne conique ainsi qu'un agencement des sections. Il s'agit ici d'obtenir en zone (6) un niveau de pression nettement plus élevé que dans les autres zones. Selon l'invention le solvant fort $S_2$ pourra être supercritique dans la zone (6) tandis que le solvant faible $S_1$ sera le même fluide légèrement sous critique dans les zones (5),(4),(3) et (2), une autre possibilité consistera à prendre comme solvant fort $S_2$ un fluide largement supercritique en zone (6) par exemple du $CO_2$ à 130 bars et 35°C et le même fluide juste au-dessus de son point critique par exemple du $CO_2$ à 80 bars et 35°C comme solvant faible $S_1$. La vanne décrite en figure 6 s'insère juste en amont ou en aval du clapet anti-retour 34 (fig. 1). Seules les sections 14 à 17 ont été représentées. Dans la position représentée les sections 14 à et 15 se trouvent en zone de haute pression tandis que les sections 16 et 17 se trouvent en zone de basse pression. L'écoulement entre les sections 14 et 15 et 16 et 17 s'effectue comme à travers un simple tuyau de liaison 53, tandis qu'entre les sections 15 et 16 une vanne de régulation de pression 54 un régulateur et un capteur de pression différentiel 55 permettent de réguler une différence de pression entre les zones amont 56 et aval 57. Lorsque cette vanne tourne d'une position dans le sens des aiguilles d'une montre, c'est à la jonction des sections 16 et 17 que la différence de pression sera régulée. Bien entendu pour créer une telle zone de haute pression 56 il faudra prélever à la fin de la zone (2) par la vanne de recyclage un courant de recyclage dont la pression sera augmentée au moyen de la pompe de recyclage et/ou envoyer par la vanne de solvant fort $S_2$ du solvant fort à une pression adéquate. Le boisseau de vanne 51 représenté permet donc un simple écoulement interne au boisseau conique 53 dans toutes les positions sauf une. Dans une position particulière le flux entrant dans la vanne est dirigé vers une boucle externe de régulation de pression différentielle 54 et 55 puis le fluide détendu retransite par la vanne 51 vers la sortie correspondante.

Selon cette seconde variante de l'invention, il est bien sur nécessaire d'assurer pendant toute la période une régulation de la différence de pression entre les zones (6) et (5) [cf. Fig 6: zones (56) et (57)] ce qui impose de faire passer un débit à travers la vanne de régulation et un débit doit donc transiter à travers le clapet (34) de la zone (6) à la zone (5).

Les exemples suivants illustrent l'invention à titre non limitatif.

Exemple n° 1

On veut séparer sur une résine échangeuse d'ions (cationique) échangée au calcium, un mélange de 12 % de glucose, 78,5 % de xylose et 9,5 % poids d'arabinose en solution aqueuse à 400 g/l de matières sèches. On opère conformément au schéma de la figure (1). Le solvant fort et le solvant faible sont tous deux de l'eau permutée, la différence de pouvoir éluant venant de la température. On dispose de 24 colonnes à double enveloppe, la température est imposée par une circulation d'eau extérieure et chaque colonne peut donc être thermostatée soit à 35°C, soit à 75°C. Les colonnes ont un diamètre intérieur de 1,6 cm et présentent la particularité d'être compressées axialement pour s'adapter aux variations de volume apparent de la phase active qui peuvent atteindre 2,8 %. Chaque période dure 37 min 30 secondes, le cycle complet comporte 24 périodes (voir figure 2), soit 15 h. A titre d'exemple on décrit seulement la première période du cycle brièvement. Pendant cette période la zone (6) est constituée des cinq premières colonnes $C_1$ à $C_5$ thermostatées à 75°C. Pendant la première étape de chaque période (durée 33 min 09 sec) on envoie en colonne C1 un courant de recyclage issu de la zone (2) débit (3,225 cm$^3$/min) ainsi qu'un appoint d'eau permutée de 1,415 cm$^3$/min, pendant la seconde étape de la période (33 min 10 sec à 37 min 30 sec). On envoie de l'eau permutée à raison de 4,64 cm$^3$/min. Pendant toute la durée de la période le débit en zone (6) est donc de 4,64 cm$^3$/min. A la sortie de la colonne 5 on prélève pendant une première partie de la période (de t = 0 à t = 7 min 12 sec), l'intégralité de ce flux pour l'envoyer vers un réservoir tampon (ce temps correspond au fait que la température de sortie de la colonne 5 met un peu plus de 7 minutes pour passer de de 35°C à 60°C). Pendant le reste de la période on produit un flux (4,64 cm$^3$/min) dont la composition moyenne est la suivante : xylose 0,27 g/l$^{-1}$, arabinose 1,87 g/l$^{-1}$ calcium environ 7 ppm poids de $Ca(OH)_2$.

Pendant la période 1 la zone (5) est constituée des colonnes 6 à 10 thermostatées à 35°C. Pendant une première partie de la période (de t = 0 à t = 8 min 19 sec) on introduit en colonne 6 l'intégralité du liquide contenu dans le réservoir tampon à raison de 4 cm$^3$/min, pendant une seconde partie de la période (de t = 8 min 20 sec à t = 33 min 10 sec) on introduit de l'eau permutée à raison de 4 cm$^3$/min, enfin, de (t = 33 min 1 sec à t = 37 min 30 sec) on introduit le courant de recyclage issu de la zone (2) égal à 3,225 cm$^3$/min

ainsi qu'un appoint d'eau permutée de 0,775 cm$^3$/min. A l'intérieur de la zone (5) le débit constant a pour valeur 4 cm$^3$/min. A la sortie de cette zone on prélève un courant d'extrait E$_1$ de 0,746 cm$^3$, dont la composition est la suivante : glucose 0,93 g.l$^{-1}$, xylose 86,9 g.l$^{-1}$, arabinose 1,42 g.l$^{-1}$, calcium environ 6 ppm poids de Ca-(OH)$_2$. Pendant la période 1, la zone (4) est constituée des colonnes 11 à 14 (thermostatées à 35°C). A l'entrée de cette zone on approvisionne un courant direct issu de la zone (5) de débit 3,254 cm$^3$/min. Ce débit reste constant dans toute la zone (4) et est dirigé à sa sortie vers la zone (3). Pendant la période (1) la zone (3) est constituée des colonnes 15 à 18 (thermostatées à 35°C). A l'entrée de cette zone on ajoute au courant de recyclage de 3,25 cm$^3$/min issu de la zone (4) un débit de charge de 0,213 cm$^3$/min. La composition de la charge est la suivante : xylose 314 g.l$^{-1}$, glucose 48 g.l$^{-1}$, arabinose 38 g.l$^{-1}$. Le débit à l'intérieur de la zone (3) est de 3,467 cm$^3$/min. A la sortie de la zone (3) on prélève un courant de raffinat de 0,24 cm$^3$/min, dont la composition est la suivante : glucose 39,95 g.l$^{-1}$ et xylose 4,14 g.l$^{-1}$, calcium environ 6 ppm poids de Ca(OH)$_2$. Pendant la période 1, la zone (2) est constituée des colonnes 19 à 24 thermostatées à 35°C. Le débit à l'entrée de la colonne 19 est de 3,227 cm$^3$/min, c'est un courant direct issu de la zone (3). A l'intérieur de la zone le débit est constant à 3,227 cm$^3$/min. A la sortie de la zone (2) le courant est recyclé à l'entrée de la zone (6) de t = 0 à t = 33 min 10 s puis vers l'entrée de la zone (5) durant la fin de la période.

Exemple n° 2

On traite sur du charbon actif de grande surface spécifique (530 m$^2$/g mesurée par BET) de l'eau polluée par du phénol (0,57 % poids) de l'orthocrésol (0,34 % poids) et du toluène (0,05 % poids). On régénère cet adsorbant par du dioxyde de carbone supercritique à une température d'environ 50°C et une pression de l'ordre de 14,5 M pascals.

Chaque section est constituée par une colonne d'inox de 1,5 m de hauteur et 30 cm de diamètre dans laquelle on a chargé environ 60 kg de charbon actif sous forme de de poudre de granulométrie comprise entre 0,2 mm et 0,5 mm. On dispose de 24 sections ou colonnes de ce type reliées entre elles par les dispositifs décrits en figures 1, 2, 3 et une vanne telle que celle décrite en figure 6. L'agencement du procédé est voisin de ceux présentés en figures 1 et 2 avec cependant une repartition différentes des colonnes dans les zones et des séparations d'effluents très simplifiées (ballons séparateurs). Chacune des périodes dure 13 minutes 10 secondes.

Au cours de la première période du cycle, on approvisionne au moyen de la pompe et de la vanne de charge l'eau polluée à l'entrée de la section 1 et l'on recueille de l'eau propre à la sortie de la section 15 (teneurs résiduelles en impuretés phénol 0,7 ppm, orthocrésol 0,4 ppm, toluène 1,2 ppm, teneur en $CO_2$ 0,45 %). Cet ensemble constitue la zone (3). Le débit d'eau polluée est 5 m$^3$/h, la pression à l'entrée de la section 1 est de l'ordre de 1,2 MPa à la sortie de la section 15 elle est de 0,3 à 0,4 MPa, tandis que la température de cette charge peut varier de 5°C à 35°C. Le débit d'eau propre à la sortie de la colonne 15 est sensiblement à 4,95 m$^3$/h : 4,75 m$^3$/h sont produits sous forme de raffinat, 0,2 m$^3$/h transite vers la section 16. Les colonnes sont disposées verticalement, l'entrée se fait à la partie inférieure, la sortie à la partie supérieure. Les 4,75 m$^3$/h d'eau propre sont envoyés vers un séparateur gaz liquide fonctionnant à pression atmosphérique et à température ambiante d'où l'on récupère environ 8 m$^3$/h de $CO_2$ gazeux et 4,73 m$^3$/h d'eau ne contenant plus que 0,13 % de $CO_2$.

La zone (2) est constituée des colonnes 16 et 17. A l'entrée de cette zone un courant d'eau propre d'environ 0,2 m$^3$/h arrive de provenance de la zone 3. La sortie de la colonne 17 est connectée à la vanne de recyclage VRcy. Au début de la période la pression dans la colonne 17 est 14,5 MPa. La vanne de recyclage VRcy met en connection la sortie de la colonne 17 à la pompe de recyclage PRcy capable de pomper un mélange diphasique. Pendant la première étape de la période la pompe de recyclage renvoie du $CO_2$ supercritique contenant 0,47 % poids de phénol, 0,28 % poids d'orthocrésol et 0,02 % poids de toluène et 0,01 % d'eau vers la zone 6 (section n° 1) ; la pression dans la colonne 17 chute de 14,5 MPa à 7,5 MPa, tandis que la pression en colonne 16 monte de 0,2 à 0,8 MPa. Pendant cette première étape le courant de recyclage est monophasique. Pendant la seconde étape de la période, la pompe de recyclage est occultée ; un brouillard de $CO_2$ sous critique et d'eau (mélange diphasique) est détendu vers la zone 5 (section 23), à la fin de la seconde étape la pression en section 17 est de l'ordre de 3,6 MPa. Enfin lors de la troisième étape un compresseur aspire le $CO_2$ restant dans la section 17 à travers la vanne de recyclage pour le renvoyer vers la zone 5. A la fin de cette troisième étape, la pression dans les sections 16 et 17 est environ 0,15 MPa. Lors des seconde et troisième étapes de la période la composition moyenne du courant recyclé vers la zone 5 est la suivante : $CO_2$ 95,5 %, $H_2O$ 4,15 %, phénol 0,19 % poids, orthocrésol 0,14 % poids, toluène 0,02 % poids.

La zone 6 est constituée des sections 18 à 22. Le débit à l'entrée de la zone 6 est de 2675 kg/h de $CO_2$ à 99,2 %, le complément à 100% étant constitué d'impuretés phénol, orthocrésol, toluène et surtout d'eau. Pendant la première étape de la période une partie de ce flux provient du courant de recyclage issu de la zone 2 et la majeure partie du courant est constituée de solvant fort, le tout transitant par la vanne de solvant fort VS2. Pendant les 2ème et 3ème étapes de la période l'intégralité du débit provient du courant de solvant fort. En moyenne sur la période l'entrée de solvant fort représente 2575 kg/h de $CO_2$ de bonne pureté et le courant de recyclage 100 kg/h. Les caractéristiques physiques du fluide entrant en zone 6 sont les suivantes : P = 14,5 MPa, T = 50°C, = 0,68 kg/dm$^3$. L'extrait au solvant fort est recueilli à la sortie de la section 22. Pendant les 20 premières secondes on laisse la colonne finir de se pressuriser, pendant les 40 secondes suivantes une vanne analogue à celle de la figure 6 permet de détendre l'intégralité du flux qui transite vers la zone (5) à 2,5 MPa. Enfin pendant le reste de la période on soutire 2 645 kg/h de mélange $CO_2$ - phénol orthocrésol toluène et eau contenant environ 96,4 % poids de $CO_2$, le reste du flux transitant vers la zone (5) par l'intermédiaire de la vanne de régulation. (Lors du premier cycle la teneur en $CO_2$ est de l'ordre de 99 % poids, lors du second environ 98,1 % poids, lors du troisième 97,3 % poids ; la valeur stable de 96,4 % de $CO_2$ n'est atteinte qu'au 5ème cycle). Ce courant est évacué par la vanne multiposition VE$_2$ et un régulateur de débit massique situé en aval de cette vanne. Ce flux est envoyé à un séparateur, où une détente isenthalpique se produit (pression contrôlée 7,8 MPa ; température résultante 36°C). On obtient deux phases : la phase légère de densité 0,38 g/cm$^3$ et de composition 99,18 % de $CO_2$ est produite à un débit de 2525 kg/h, tandis que la phase lourde de densité 1,02 g/cm$^3$ et de composition 36 % de $CO_2$, 64 % de mélange phénol, orthocrésol, toluène, eau est évacuée sous contrôle de pression à raison de 120 kg/h. La phase légère est directement renvoyée vers l'admission pompe de solvant fort PS2. La phase lourde est envoyée vers un Ballon où elle est réchauffée pour être flashée à 50°C et 0,2 MPa. On obtient une phase liquide (77 kg/h contenant moins de 0,6 % poids de $CO_2$ - (mélange phénol orthocrésol toluène) et une phase gazeuse contenant environ 0,12 % d'impureté (43 kg/h). Cette phase est ramenée à 7,8 MPa au moyen d'un compresseur.

La section 23 constitue la zone (5) du procédé. Les branchements des lignes 36 et 31 (fig. 1) respectivement d'introduction de solvant faible et d'extrait au solvant faible sont inversés. Dans cette zone, contrairement à toutes les autres, l'introduction se fait à la partie supérieure et le prélèvement à la partie inférieure. Le solvant faible est constitué de $CO_2$ gazeux dont la pureté est en moyenne 99,8 % sur une période. Lors d'une première étape de la période le courant gazeux chasse l'eau polluée contenue dans le vide intergrain vers la zone (4). Dans une seconde étape, le $CO_2$ gazeux entraîne la plupart de l'eau contenue dans la macroporosité, on produit donc sous forme d'extrait au solvant faible un brouillard d'eau dans le $CO_2$. On note de plus un enrichissement notable en toluène par rapport à la charge. Lors de la troisième étape de la période on arrête le prélèvement d'extrait de manière à commencer la pressurisation de la section par du $CO_2$. Lors de la seconde étape l'extrait au solvant faible est envoyé vers le séparateur fonctionnant à 3°C et 0,5 MPa. La phase gazeuse $CO_2$ 99,7 % doit être recomprimée tandis que la phase liquide environ 35 kg/h présente un enrichissement en toluène par rapport à la charge : 0,09 % pds au lieu de 0,05 % pds. Ce courant est renvoyé vers le courant de charge.

## Revendications

1. Procédé de séparation en continu et en phase fluide d'un mélange ou charge, d'au moins trois constituants en trois fractions, dans lequel on fait circuler un fluide comprenant ledit mélange et du solvant à cocourant sur un sorbant contenu dans au moins une colonne de séparation présentant à intervalles réguliers d'espace, des entrées d'alimentation d'au moins une partie du fluide circulant en aval de ces entrées, des sorties de soutirage d'au moins une partie du fluide circulant en aval de ces entrées, ladite colonne présentant une liaison ou boucle de circulation excerne du fluide entre une extrémité amont et une extrémité aval, on fait se déplacer à cocourant les dites sorties de soutirage et les entrées d'alimentation dans des conditions dites à contre-courant simulé, les constituants présentant vis-à-vis du sorbant et du solvant des degrés de forte, moyenne et faible adsorption relative, procédé dans lequel on réalise la combinaison des étapes suivantes :

   a) On détermine cinq zones contigues (2),-(3),(4),(5) et (6) ayant des fonctions distinctes et étant connectées en série entre elles de sorte que les dites zones et la liaison externe assurent une continuité;

   b) On détermine une zone (2) d'adsorption du ou des constituants les moins adsorbés dans la colonne, ladite zone (2) étant définie par une quantité de sorbant localisée entre une sortie d'un raffinat R "au solvant faible" à une extrémité amont de cette zone et une sortie d'un courant de recyclage à une extrémité aval de ladite zone;

c) On détermine une zone (3) d'adsorption du ou des constituants moyennement adsorbés dans la colonne, la dite zone étant définie par une quantité de sorbant localisée entre une entrée dudit mélange à une extrémité amont de ladite zone et la sortie du raffinat R au solvant faible, ladite zone (3) étant située immédiatement en amont de la zone (2);

d) On détermine une zone (4) de désorption du ou des constituants les moins adsorbés immédiatement en amont de la zone (3), ladite zone (4) étant définie par une quantité de sorbant localisée entre ladite entrée du mélange et une sortie d'un extrait $E_1$ au solvant dit faible défini ci-dessous, à une extrémité amont de ladite zone (4),

e) On détermine une zone (5) de désorption du ou des constituants moyennement adsorbés immédiatement en amont de la zone (4), ladite zone (5) étant définie par une quantité de sorbant localisée entre ladite sortie de l'extrémité $E_1$ au solvant faible et une entrée d'une alimentation en solvant faible à une extrémité amont de ladite zone (5),

f) On détermine une zone (6) de désorption du ou des constituants les plus adsorbés immédiatement en amont de la zone (5), ladite zone (6) étant définie par une quantité de sorbant localisée entre une sortie d'un extrait $E_2$ au solvant dit fort défini ci-dessous à une extrémité aval de ladite zone (6) et une entrée d'une alimentation en solvant fort à une extrémité amont de ladite zone,

g) On introduit du solvant dit fort $S_2$ à l'extrémité amont de la zone (6), du solvant dit faible $S_1$ à l'extrémité amont de la zone (5) et ledit mélange à l'extrémité amont de la zone (3), les solvants $S_1$ et $S_2$ étant de même nature chimique ou de composition sensiblement identique lorsqu'il s'agit de mélanges, mais le solvant $S_2$ étant à une température ou à une pression plus élevée que celle du solvant $S_1$,

h) On fait circuler le mélange et le courant issu directement de la zone (4) dans la zone (3) dans des conditions d'adsorption telles qu'elles permettent l'adsorption du ou des constituants moyennement adsorbés dans ladite zone (3) et l'on soutire en aval de la zone (3) le raffinat R comprenant le ou les constituants les moins adsorbés et une partie du solvant $S_1$ que l'on sépare,

i) On fait circuler dans la zone (2) le reste du courant issu de la zone (3) dans des conditions d'adsorption telles qu'elles permettent l'adsorption du ou des constituants le ou les moins adsorbé(s) restant(s) et l'on prélève comme courant de recyclage l'intégralité du flux issu de la zone (2);

j) On fait circuler dans la zone (6):
- pendant une première étape de la période, le courant de recyclage prélevé selon i) ci-dessus avec un appoint de solvant fort $S_2$,
- ensuite du solvant fort $S_2$

dans des conditions de désorption telles qu'elles permettent la désorption du ou des constituant(s) le ou les plus adsorbé(s) et l'on prélève en aval de la zone (6) un courant constitué:

$j_1$) lorsque le solvant $S_2$ se différencie par la température du solvant $S_1$, l'intégralité du flux issu de cette zone (6) qui, après la première étape de la période mentionnée sous $k_1$) ci-dessous, représente l'extrait $E_2$ comprenant une partie du ou des constituant(s) le ou les plus adsorbé(s) et une partie du solvant fort $S_2$ que l'on sépare,

$j_2$) lorsque le solvant $S_2$ se différencie par la pression du solvant $S_1$, la partie du flux issu de cette zone (6) qui ne transite pas selon $k_2$ ci-dessous vers la zone (5) et qui représente l'extrait $E_2$ comprenant une partie du ou des constituant(s) le ou les plus adsorbé(s) et une partie du solvant fort $S_2$ que l'on sépare;

k) on fait circuler dans la zone (5):

$k_1$) lorsque le solvant $S_2$ se différencie par la température du solvant $S_1$, pendant une première étape de la période le courant prélevé selon $j_1$) ci-dessus, puis le courant de recyclage issu de la zone (2) selon i, ci-dessus avec un appoint de solvant faible $S_1$,

$k_2$) lorsque le solvant $S_2$ se différencie par la pression du solvant $S_1$:
- d'une part, un courant qui transite depuis la zone (6) à travers des moyens (51,54) de régulation de la différence de pression entre les zones (6) et (5) avec un débit nécessaire au fonctionnement de ces moyens (51,54),
- d'autre part, un appoint de solvant faible $S_1$ que l'on remplace au moins partiellement, après la première étape de la période mentionnée sous j) ci-dessus, par le courant de recyclage prélevé selon i) ci-dessus,

dans des conditions de désorption telles qu'elles permettent la désorption du ou des constituant(s) moyennement adsorbé(s),

et l'on soutire une partie du flux issu de la zone (5) qui représente l'extrait $E_1$ comprenant une partie du ou des constituant(s) moyennement adsorbé(s) et une partie du solvant $S_1$ que l'on sépare;

l) On fait circuler dans la zone (4) le reste du courant issu de la zone (5) dans des conditions de désorption telles qu'elles permettent la désorption du ou des constituant(s) le ou les moins adsorbé(s) et l'adsorption du ou des constituant(s) moyennement adsorbé(s);

m) On entame une nouvelle période en faisant avancer de manière synchrone à travers la ou les colonnes de sorbant, dans la direction de la circulation du mélange l'entrée du mélange, la sortie du raffinat R, l'entrée du solvant fort $S_2$, la sortie de l'extrait $E_2$, l'entrée de solvant faible $S_1$, la sortie de l'extrait $E_1$ et la sortie du courant de recyclage de facon à déplacer les zones (2),(3),(4),(5), et (6) dans la ou les colonnes de sorbant et à produire les trois fractions recherchées.

2. Procédé selon la revendication 1 dans lequel le solvant dit fort est utilisé à une température supérieure d'au moins 10°C et avantageusement supérieure de 20 a 50°C à celle du même solvant dit faible.

3. Procédé selon la revendication 1 dans lequel le solvant $S_2$ dit fort est utilisé à une pression supérieure d'au moins 1 MPa et avantageusement supérieure de 2 à 20 MPa à celle du même solvant dit faible.

4. Procédé selon la revendication 1, dans lequel le solvant fort $S_2$ est introduit en zone 6 à l'état supercritique.

5. Procédé selon la revendication 1, dans lequel les conditions d'adsorption et les conditions de désorption comprennent les débits d'alimentation et de soutirage tels que les fronts d'élution se déplacent dans les différentes zones de l'amont vers l'aval de la colonne avec sensiblement la même vitesse

6. Procédé selon la revendication 1 dans lequel les solvants $S_1$ et $S_2$ se différencient par la témperature et selon lequel :

a) On alimente la zone (6) durant une première étape avec un débit $d_3 = d_1 + d_2$ avec $d_1$ étant le débit du courant de recyclage issu de la zone 2 et $d_2$ étant le débit d'alimentation en solvant fort $S_2$, puis durant une deuxième étape avec un débit $d_3$ de solvant fort $S_2$ identique au débit lors de la première étape, et on récupère durant la première étape du solvant faible que l'on envoie dans un réservoir de stockage et durant une seconde étape on récupère l'extrait $E_2$ au solvant fort que l'on sépare de façon à obtenir le ou les constituants les plus adsorbés,

b) On alimente la zone (5) durant une première étape avec un débit $d_5$ tel que $d_5 < d_3$ d'une partie au moins du solvant faible provenant du réservoir ci-dessus et durant la seconde étape, on alimente la zone (5) avec un débit $d_1$ du courant de recyclage issu de la zone 2 et avec un débit $d_4$, tel que $d_4 = d_5 - d_1$, de la partie restante de solvant faible issue du réservoir de stockage puis éventuellement de solvant faible supplémentaire, et on récupère l'extrait $E_1$ au solvant faible avec un débit $d_6$ tel que $d_6 < d_5$, que l'on sépare de façon à obtenir le ou les constituants moyennement adsorbés,

c) On alimente la zone (4) en la partie restante du flux issu de la zone 5 avec un débit égal à $d_5 - d_6$ de façon à obtenir en sortie un courant issu de la zone (4) de même débit,

d) On alimente la zone (3) en ledit mélange avec un débit $d_7$ et en ledit courant issu de la zone (4) avec le débit $d_5 - d_6$, soit un débit total $d_5 - d_6 + d_7$ et l'on récupère avec un débit $d_8$ une partie au moins du raffinat R au solvant faible, que l'on sépare de façon à obtenir le ou les constituants les moins adsorbés, le débit $d_8$ étant tel que $d_8 + d_6 = d_4 + d_7$,

e) On alimente la zone (2) en la partie restante issue la zone (3) avec un débit égal à $d_5 - d_6 + d_7 - d_8$ soit $d_1$ et on récupère avec un débit $d_1$ le courant de recyclage pour alimenter la zone (6), puis la zone (5), comme indiqué dans les étapes a) et b).

7. Procédé selon la revendication 1 selon lequel, dans la variante $k_1$), on fait circuler pendant une étape intermédiaire du solvant faible $S_1$ seul avant de faire appel au courant de recyclage.

8. Dispositif de séparation en continu et en phase fluide d'un mélange d'au moins trois constituants en trois fractions caractérisé en ce qu'il comprend en combinaison : au moins une colonne de séparation comportant cinq zones contiguës dont chacune comprend au moins une section cylindrique remplie d'un sorbant, chaque section étant de volume sensiblement identique et ayant une entrée et une sortie, la sortie d'une section étant reliée à l'entrée de la suivante par une liaison 100 adaptée à la circulation du fluide dans une direction déterminée grâce à des moyens anti-retour 34 connectés à cette liaison, l'entrée de chaque section comportant, en aval de ces moyens anti-retour, des moyens d'alimentation 38 en mélange, des moyens d'alimentation 36 en solvant $S_1$, dit faible comportant soit des moyens de refroidissement (46) reliés à une alimentation en solvant, soit des premiers moyens de mise en pression reliés à une alimentation en solvant et des moyens d'alimentation 37 en solvant $S_2$ dit fort comportant soit des moyens de chauffage (45) reliés à une alimentation en le même solvant, soit des seconds moyens de mise en pression reliés à une alimentation en le même solvant, les dits premiers moyens de mise en pression étant adaptés à délivrer une pression plus faible que celle obtenue par lesdits seconds moyens de mise en pression, la sortie de chaque section comportant, en amont des moyens anti-retour, des moyens de soutirage 31 d'un extrait $E_1$ au solvant $S_1$, des moyens de soutirage 30 d'un extrait $E_2$ au solvant $S_2$, des moyens de soutirage 32 d'un raffinat R au solvant $S_1$ et des moyens de soutirage 33 d'un courant de recyclage, ainsi que des moyens assurant le recyclage, l'ensemble de ces moyens d'alimentation et de soutirage étant agencé de telle façon que :

- une cinquième zone (6) est délimitée par une entrée reliée aux moyens d'alimentation en solvant $S_2$ et par une sortie reliée aux moyens de soutirage en extrait $E_2$ au solvant fort ;
- une quatrième zone (5) immédiatement en aval de la cinquième est délimitée par une entrée reliée aux moyens d'alimentation en solvant $S_1$, dit faible et par une sortie reliée aux moyens de soutirage en extrait $E_1$ au solvant faible ;
- une troisième zone (4) immédiatement en aval de la quatrième zone est délimitée par une entrée reliée à la sortie de la quatrième zone et par une sortie reliée aux moyens d'alimentation en mélange ;
- une seconde zone (3) immédiatement en aval de la troisième zone est délimitée par une entrée reliée à la sortie de la troisième zone (4) et par une sortie reliée aux moyens de soutirage du raffinat R au solvant faible ;
- une première zone (2) immédiatement en aval de la seconde zone est délimitée par une entrée reliée à la sortie de la seconde zone et par une sortie reliée aux moyens de soutirage en courant de recyclage ;

le dispositif comprenant en outre :
- des moyens de déplacements successifs, dans la direction de la circulation du fluide, d'une part des dits moyens de soutirage de l'extrait $E_1$, de l'extrait $E_2$, du raffinat R et du courant de recyclage ainsi que des moyens assurant la recirculation et d'autre part des dits moyens en alimentation en solvant $S_1$, en solvant $S_2$, et, en mélange, ces moyens étant adaptés à réaliser des conditions dites à contre-courant simulé, le dispositif comportant encore des moyens adaptés à connecter la sortie de la première zone (2) alternativement à l'entrée de la cinquième zone (6) puis à l'entrée de la quatrième zone (5) et comportant aussi des moyens adaptés à connecter la sortie de la cinquième zone (6) soit d'abord à l'entrée de la quatrième zone (5), puis aux moyens de soutirage de l'extrait $E_2$ au solvant fort, soit directement aux moyens de soutirage de l'extrait $E_2$, au solvant fort, le dispositif comportant enfin sur la liaison 100, soit les seuls moyens anti-retour (34) empêchant la circulation du fluide de la zone (5) vers la zone (6), soit ces dits moyens plus des moyens de régulation (51, 54) de la différence de pression entre les zones (6) et (5)

9. Dispositif selon la revendication 8, caractérisé en ce qu'il comporte des moyens de régulation de débit reliés aux moyens d'alimentation et de soutirage et adaptés à faire se déplacer les fronts d'élution dans les différentes zones à la même vitesse.

10. Dispositif selon l'une des revendications 8 et 9, caractérisé en ce que les moyens d'alimentation en solvant $S_1$, en solvant $S_2$ et en mélange (38) et les moyens de soutirage en extrait $E_2$, en extrait $E_1$, en raffinat (32) et en courant de recyclage (33) comportent chacun d'eux une vanne adaptée à mettre alternativement en communication chacun de ces flux avec toutes les sections.

11. Dispositif selon la revendication 10 dans lequel les moyens de régulation de la différence de pression, comprennent une vanne adaptée à une circulation en série entre chaque deux sections consécutives sauf deux et à une régulation de pression différentielle entre deux sections consécutives particulières, cette vanne étant connectée en série sur ladite liaison.

12. Application du procédé selon l'une des revendications 1 à 7 ou de l'appareil selon l'une des revendications 8 à 11 dans un procédé d'épuration d'eaux contenant du phénol, de l'orthocrésol et du toluène, dans un procédé de séparation d'un mélange contenant du xylose, de l'arabinose et du fructose ou du glucose, dans un procédé de séparation d'un mélange d'éthylbenzène, de paraxylène, d'orthoxylène et de métaxylène et dans un procédé de production d'aromes et d'huiles essentielles.

## Claims

1. A process for the continuous separation, in the fluid phase, of a mixture or charge of at least three constituents into three fractions, wherein a fluid comprising said mixture and solvent are circulated in cocurrent over a sorbent contained in at least one separation column which has, at regularly spaced intervals, feed inlets for at least part of the fluid circulating downstream of these inlets, and draw-off outlets for at least part of the fluid circulating downstream of these inlets, said column having a link or loop for external circulation of the fluid between an upstream end and a downstream end, and said draw-off outlets and the feed inlets are caused to move in cocurrent under so-called simulated countercurrent conditions, the constituents having degrees of strong, moderate and weak relative adsorption with respect to the sorbent and the solvent, a process in which the following combination of steps is performed:

   a) five contiguous zones (2), (3), (4), (5)and (6) are determined which have different functions and which are connected to one another in series so that said zones and the external link ensure continuity,

   b) a zone (2) is determined for adsorption of the least adsorbed constituent or constituents in the column, said zone (2) being defined by a quantity of sorbent located between an outlet for a "weak solvent" raffinate R at an upstream end of this zone and an outlet for a recycling stream at a downstream end of said zone,

   c) a zone (3) is determined for adsorption of the moderately adsorbed constituent or constituents in the column, said zone being defined by a quantity of sorbent located between an inlet for said mixture at an upstream end of said zone and the outlet for the weak solvent raffinate R, said zone (3) being situated immediately upstream of zone (2);

   d) a zone (4) is determined for desorption of the least adsorbed constituent or constituents immediately upstream of zone (3), said zone (4) being defined by a quantity of sorbent located between said inlet for the mixture and an outlet for a so-called weak solvent extract $E_1$, defined below, at an upstream end of said zone (4),

   e) a zone (5) is determined for desorption of the moderately adsorbed constituent or constituents immediately upstream of zone (4), said zone (5) being defined by a quantity of sorbent located between said outlet for the weak solvent extract $E_1$ and an inlet for a weak solvent feed at an upstream end of said zone (5),

   f) a zone (6) is determined for desorption of the most adsorbed constituent or constituents immediately upstream of zone (5), said zone (6) being defined by a quantity of sorbent located between an outlet for a so-called strong solvent extract $E_2$, defined below, at a downstream end of said zone (6) and an inlet for a strong solvent feed at an upstream end of said zone,

   g) so-called strong solvent S2 is introduced at the upstream end of zone (6), so-called weak solvent S1 is introduced at the upstream end of zone (5) and said mixture is introduced at the upstream end of zone (3), the solvents S1 and S2 being of the same chemical nature or of a substantially identical composition in case of mixtures, but solvent S2 having a higher temperature or pressure than solvent S1,

   h) The mixture and the stream coming directly from zone (4) are circulated in zone (3) under adsorption conditions which are such as to permit the adsorption of the moderately adsorbed constituent or constituents in said zone (3), and raffinate R comprising the least adsorbed constituent or constituents and part of solvent S1 is drawn off downstream of zone (3) and separated,

   i) the remaining part of the flow coming from zone (3) is circulated in zone (2) under adsorption conditions which are such as to permit the adsorption of the remaining least adsorbed constituent or constituents, and the whole of the flow coming from zone (2) is drawn off as the recycling stream;

j)

- during a first step of the period, the recycling stream drawn off according to i) above and makeup strong solvent S2,
- then strong solvent S2

are circulated in zone (6) under desorption conditions which are such as to permit the desorption of the most adsorbed constituent or constituents

and a stream consisting:

$j_1$) when the temperature of solvent S2 is different from that of solvent S1, of the whole of the flow coming from this zone (6) which, after the first step of the period mentioned in $k_1$) below, represents the extract E2 comprising part of the most adsorbed constituent or constituents and part of the strong solvent S2 which are separated,

$j_2$) when the pressure of solvent S2 is different from that of solvent S1, of the part of the flow coming from this zone (6) which does not pass, according to $k_2$ below, to zone (5) and which represents the extract E2 comprising part of the most adsorbed constituent or constituents and part of the strong solvent S2 which are separated

are drain off downstream of zone (6).

k)

$k_1$) when the temperature of solvent S2 is different from that of solvent S1, during a first step of the period, the stream drawn off according to $j_1$) above, then the recycling stream coming from zone (2) according to i) above with makeup weak solvent S1,

$k_2$) when the pressure of solvent S2 is different from that of solvent S1 :

- on the one hand, a stream passing from zone (6) through means (51, 54) for regulating the differential pressure between zones (6) and (5) with a flow rate necessary to the operation of these means (51, 54),
- on the other hand, makeup weak solvent S1 which is replaced, at least partly, after the first step of the period mentioned at j) above, by the recycling stream drawn off according to i) above

are circulated in zone (5) under desorption conditions which are such as to permit the desorption of the moderately adsorbed constituent or constituents,

and part of the flow coming from zone (5), which represents the extract E1 comprising part of the moderately absorbed constituent or constituents and part of the solvent S1 which are separated, is drawn off.

l) The remaing part of the stream coming from zone (5) is circulated in the zone (4) desorption conditions which are such as to permit the desorption of the least adsorbed constituent or constituents and the moderately adsorbed constituent or constituents.

m) A new period is started by causing to advance synchronously through the column or columns of sorbent, in the direction of circulation of the mixture, the inlet for the mixture, the outlet for raffinate R, the inlet for strong solvent $S_2$, the outlet for extract $E_2$, the inlet for weak solvent $S_1$, the outlet for extract $E_1$ and the outlet for the recycling stream so as to displace zones (2), (3), (4), (5) and (6) in the column or columns of sorbent and to produce the desired three fractions.

2. A process according to claim 1, in which the so-called strong solvent is used at a temperature which is at least 10°C and advantageously 20 to 50°C higher than that of the same so-called weak solvent.

3. A process according to claim 1, in which the so-called strong solvent $S_2$ is used at a pressure which is at least 1 MPa and advantageously 2 to 20 MPa higher than that of the same so-called weak solvent.

4. A process according to claim 1, in which strong solvent $S_2$ is introduced into zone (6) in the supercritical state.

5. A process according to claim 1, in which the adsorption conditions and the desorption conditions involve feed and draw-off rates which are such that the elution fronts move through the different zones from the upstream end to the downstream end of the column at substantially the same speed.

6. A process according to claim 1, in which solvents $S_1$ and $S_2$ differ in temperature, and in which :

a) zone (6) is fed during a first step at a flow rate $d_3 = d_1 + d_2$, where $d_1$ is the flow rate of the recycling stream coining from zone (2) and $d_2$ is the feed rate of strong solvent $S_2$, then during a second step with strong solvent $S_2$ at a flow rate $d_3$ which is identical to the flow rate in the first step, weak solvent is recovered during the first step and is sent to a storage reservoir, and the strong solvent extract $E_2$ is recovered during a second step and is separated to give the most adsorbed constituent or constituents,

b) zone (5) is fed during a first step at a flow rate $d_5$, where $d_5 < d_3$, with at least part of the weak solvent originating from the above reservoir, and zone (5) is fed during the second step at a flow rate $d_1$ with the recycling stream coming from zone (2) and at a flow rate $d_4$, where $d_4 = d_5 - d_1$, with the remaining part of the weak solvent coming from the storage reservoir and then, if appropriate, with additional weak solvent, and at least part of the weak solvent extract $E_1$ is recovered at a flow rate $d_6$, where $d_6 < d_5$, and is separated to give the moderately adsorbed constituent or constituents,

c) zone (4) is fed with the remaining part of the flow coming from zone (5) at a flow rate equal to $d_5 - d_6$ so as to give, at the outlet, a stream coming from zone (4) at the same flow rate,

d) zone (3) is fed with said mixture at a flow rate $d_7$ and with said stream coming from zone (4) at a flow rate $d_5 - d_6$, i.e. a total flow rate $d_5 - d_6 + d_7$, and at least part of the weak solvent raffinate R is recovered at a flow rate $d_8$ and is separated to give the least adsorbed constituent or constituents, the flow rate $d_8$ being such that $d_8 + d_6 = d_4 + d_7$,

e) zone (2) is fed with the remaining part coming from zone (3) at a flow rate equal to $d_5 - d_6 + d_7 - d_8$, i.e. $d_1$, and the recycling stream is recovered at a flow rate $d_1$ in order to feed zone (6), then zone (5), as indicated in steps a) and b).

7. A process according to claim 1 in which, in variant $k_1$), weak solvent $S_1$ is circulated alone during an intermediate step prior to circulating the recycling stream.

8. A device for the continuous separation, in the fluid phase, of a mixture of at least three constituents into three fractions, characterized in that it comprises the following in combination : at least one separation column having five contiguous zones, each of which comprises at least one cylindrical section packed with a sorbent, each section being of essentially identical volume and having an inlet and an outlet, the outlet of one section being connected to the inlet of the next by a link 100 adapted for the circulation of a fluid in a given direction by virtue of non-return means 34 connected to this link, the inlet of each section possessing, downstream of these non-return means, means 38 for feeding mixture, means 36 for feeding so-called weak solvent $S_1$ comprising either cooling means (46) connected to a feed for solvent or first pressurizing means connected to a feed for solvent, and means 37 for feeding so-called strong solvent $S_2$ comprising either heating means (45) connected to a feed for the same solvent or second pressurizing means connected to a feed for the same solvent, said first pressurizing means being adapted for delivering a lower pressure than that obtained by said second pressurizing means and the outlet of each section possessing, upstream of the non-return means, means 31 for drawing off a solvent $S_1$ extract $E_1$, means 30 for drawing off a solvent $S_2$ extract $E_2$, means 32 for drawing off a solvent $S_1$ raffinate R and means 33 for drawing off a recycling stream, as well as means ensuring recycling, all these feed and draw-off means being arranged in such a way that :

- a fifth zone (6) is delimited by an inlet connected to the means for feeding solvent $S_2$ and by an outlet connected to the means for drawing off strong solvent extract $E_2$,
- a fourth zone (5), immediately dowstream of the fifth zone, is delimited by an inlet connected to the means for feeding so-called weak solvent $S_1$ and by an outlet connected to the means for drawing off weak solvent extract $E_1$,
- a third zone (4), immediately downstream of the fourth zone, is delimited by an inlet connected to the outlet of the fourth zone and by an outlet connected to the means for feeding mixture,
- a second zone (3), immediately downstream of the third zone, is delimited by an inlet connected to the outlet of the third zone (4) and by an outlet connected to the means for drawing off the weak solvent raffinate R,
- a first zone (2), immediately downstream of the second zone, is delimited by an inlet connected to the outlet of the second zone and by an outlet connected to the means for drawing off recycling stream,

the device further comprising :
- means for successive displacement, in the direction of circulation of the fluid, of said means for drawing off extract $E_1$, extract $E_2$, raffinate R and the recycling stream, as well as means for ensuring recirculation on the one hand, and of said means for feeding solvent $S_1$, solvent $S_2$ and mixture on the other hand, these means being adapted for creating so-called simulated countercurrent conditions, the device further comprising means adapted for connecting the outlet of the first zone (2) alternately to the inlet of the fifth zone (6), then to the inlet of the fourth zone (5), also comprising means adapted for connecting the outlet of the fifth zone (6) either first to the inlet of the fourth zone (5), then to the means for drawing off the strong solvent extract $E_2$, or directly to the means for drawing off the strong solvent extract $E_2$, the device finally comprising, on link 100, either only the non-return means (34) for preventing the fluid from circulating from zone (5) to zone (6), or said means plus means (51, 54) for regulating the differential pressure between zone (6) and (5).

9. A device according to claim 8, characterized in that it comprises flow regulating means connected to the feed and draw-off means and adapted for causing the elution fronts to move through the different zones at the same speed.

10. A device according to any one of claims 8 and 9, characterized in that the means for feeding solvent $S_1$, solvent $S_2$ and mixture (38) and the means for drawing off extract $E_2$, extract $E_1$, raffinate (32) and recycling stream (33) each comprise a valve adapted for alternately bringing each of these flows into communication with all the sections.

11. A device according to claim 10 in which the differential pressure regulating means comprise a valve adapted for circulation in series between every two consecutive sections except two and for differential pressure regulation between two particular consecutive sections, this valve being connected in series on said link.

12. Application of the process according to any one of claims 1 to 7, or of the apparatus according to any one of claims 8 to 11, in a process for the purification of water containing phenol, orthocresol and toluene, in a process for the separation of a mixture containing xylose, arabinose and fructose or glucose, in a process for the separation of a mixture of ethylbenzene, paraxylene, orthoxylene and metaxylene, and in a process for the production of flavours and essential oils.

**Patentansprüche**

1. Verfahren zum kontinuierlichen Trennen in fluider Phase eines Gemisches oder einer Charge aus wenigstens drei Bestandteilen in drei Fraktionen, bei dem man ein dieses Gemisch und Lösungsmittel umfassendes Fluid im Gleichstrom über ein Sorbens zirkulieren läßt, das in wenigstens einer Trennkolonne enthalten ist, die in regelmäßigen Raumintervallen Speiseeingänge für wenigstens einen Teil des Fluids, das strömungsabwärts von diesen Eingängen zirkuliert, und Abzugsausgänge für wenigstens einen Teil des in Strömungsrichtung hinter diesen Eingängen zirkulierenden Fluids aufweist, wobei diese Kolonne eine äußere Verbindung oder Zirkulationsschleife des Fluids zwischen einem anströmseitigen Ende und einem abströmseitigen Ende hat, man im Gegenstrom diese Abzugsabgänge und diese Speiseeintritte unter Bedingungen des simulierten Gegenstroms zirkulieren läßt, wobei diese Bestandteile gegenüber dem Sorptionsmittel und dem Lösungsmittel Grade, starker, mittlerer und schwacher relativer Adsorption aufweisen, wobei man bei diesem Verfahren die Kombination der folgenden Stufen realisiert:

a) man bestimmt fünf angrenzende Zonen (2), (3), (4), (5) und (6), die unterschiedliche Funktionen haben und in Reihe untereinander derart verbunden sind, daß diese Zonen und die äußere Verbindung eine Kontinuität sicherstellen;

b) man bestimmt eine Adsorptionszone (2) des oder der in der Kolonne am wenigstens adsorbierten Bestandteile, wobei diese Zone (2) definiert wird durch eine Sorptionsmittelmenge, die zwischen einem Ausgang eines Raffinats R mit schwachem Lösungsmittel an einem anströmseitigen Ende dieser Zone und einem Austritt für einen Recyclierungsstrom an einem abströmseitigen Ende dieser Zone lokalisiert ist;

c) man bestimmt eine Zone (3) zur Adsorption des oder der durchschnittlich in der Kolonne adsorbierten Bestandteile, wobei diese Zone definiert wird durch eine Sorptionsmittelmenge, die zwischen einem Eingang dieses Gemisches an einem anströmseitigen Ende dieser Zone und dem Austritt des Raffinats R bei schwachem Lösungsmittel definiert ist, wobei diese Zone unmittelbar anströmseitig zur Zone (2) angeordnet ist;

d) man bestimmt eine Zone (4) zur Desorption des oder der am wenigstens adsorbierten Bestandteile unmittelbar vor der Zone (3), wobei die Zone (4) definiert ist durch eine Sorptionsmittelmenge, die zwischen diesem Eintritt des Gemisches und einem Austritt eines Extrakts $E_1$ mit sogenanntem schwachen Lösungsmittel, unten definiert, an einem anströmseitigen Ende dieser Zone (4) lokalisiert ist;

e) man bestimmt eine Zone (5) zur Desorption des oder der durchschnittlich adsorbierten Bestandteile unmittelbar vor der Zone (4), wobei diese Zone (5) definiert ist durch eine Sorptionsmittelmenge, die zwischen diesem Ausgang des Endes $E_1$ bei schwachem Lösungsmittel und einem Eintritt einer Speisung mit schwachem Lösungsmittel an einem anströmseitigen Ende dieser Zone (5) lokalisiert ist;

f) man bestimmt eine Zone (6) zur Desorption des oder der am stärksten adsorbierten Bestandteile unmittelbar vor der Zone (5), wobei diese Zone (6) definiert ist durch eine Sorptionsmittelmenge, die zwischen einem Austritt eines Extrakts $E_2$ mit sogenanntem starken unten definiertem Lösungsmittel an einem abströmseitigen Ende der Zone (6) und einem Eintritt einer Speisung mit starkem Lösungsmittel an einem anströmseitigen Ende dieser Zone definiert ist;

g) man führt sogenanntes starkes Lösungsmittel $S_2$ am anströmseitigen Ende der Zone (6) des sogenannten schwachen Lösungsmittels $S_1$ am anströmseitigen Ende der Zone (5) sowie dieses Gemisch am anströmseitigen Ende der Zone (3) ein, wobei die Lösungsmittel $S_1$ und $S_2$ von der gleichen chemischen Art oder im wesentlichen identischer Zusammensetzung sind, wenn es sich um Gemische handelt, das Lösungsmittel $S_2$ jedoch bei einer Temperatur oder einem Druck sich befindet, die höher als die des Lösungsmittels $S_1$ sind;

h) man läßt das Gemisch und den direkt aus der Zone (4) stammenden Strom in der Zone (4) unter Adsorptionsbedingungen derart zirkulieren, daß sie die Adsorption des oder der durchschnittlich adsorbierten Bestandteile in dieser Zone (3) ermöglichen und man zieht hinter dieser Zone (3) das Raffinat R ab, das den oder die am wenigsten adsorbierten Bestandteile und einen Teil des Lösungsmittels $S_1$, das man abtrennt, umfaßt;

i) man läßt in der Zone (2) den Rest des aus der Zone (3) stammenden Stroms unter Adsorptionsbedingungen derart zirkulieren, daß sie die Adsorption des oder der verbleibenden am wenigsten adsorbierten Bestandteile ermöglichen und man entnimmt als Recyclierungsstrom die Gesamtheit des aus der Zone (2) stammenden Flusses;

j) man läßt in der Zone (6)
- während einer ersten Stufe der Periode den oben definierten Recyclierungsstrom gemäß i) mit einem Zusatz an starkem Lösungsmittel $S_2$ zirkulieren,
- dann starkes Lösungsmittel $S_2$

unter Desorptionsbedingungen, daß sie die Desorption des oder der Bestandteile, die am stärksten adsorbiert sind, ermöglichen, und man entnimmt hinter der Zone (6) einen Strom, der gebildet ist aus:

$j_1$) wenn das Lösungsmittel $S_2$ sich durch die Temperatur vom Lösungsmittels $S_1$ unterscheidet, die Gesamtheit des aus dieser Zone (6) stammenden Stroms, der nach der ersten Stufe der unter $k_1$) unten genannten Periode den Extrakt $E_2$ darstellt, der einen Teil des oder der am stärksten adsorbierten Bestandteile sowie einen Teil des starken Lösungsmittels $S_2$, den man abtrennt, umfaßt;

$j_2$) wenn das Lösungsmittel $S_2$ sich durch den Druck vom Lösungsmittel $S_1$ unterscheidet, den Teil des aus dieser Zone (6) stammenden Stroms, der nicht gemäß dem unten genannten $k_2$) gegen die Zone (5) wandert und der den Extrakt $E_2$ darstellt, der einen Teil des oder der am stärksten adsorbierten Bestandteile und einen Teil des starken Lösungsmittels $S_2$, den man abtrennt, umfaßt;

k) man läßt in der Zone zirkulieren:

$k_1$) wenn das Lösungsmittel $S_2$ sich durch die Temperatur vom Lösungsmittel $S_1$ unterscheidet, während einer ersten Stufe der Periode, den gemäß obigen $j_1$) entnommenen Strom, dann den aus der Zone (2) gemäß dem oben genannten i) stammenden Recyclierungsstrom mit einem Zusatz an schwachem Lösungsmittel $S_2$,

$k_2$) wenn das Lösungsmittel $S_2$ sich durch den Druck vom Lösungsmittel $S_1$ unterscheidet:
- einerseits einen Strom, der aus der Zone (6) quer durch Mittel (51, 54) zur Steuerung der Differenz des Drucks zwischen den Zonen (6) und (5) bei einer Menge wandert, die notwendig für den Betrieb dieser Mittel (51, 54) ist,
- andererseits einen Zusatz an schwachem Lösungsmittel $S_1$, den man wenigstens teilweise nach der ersten Stufe der unter j) oben genannten Periode durch den gemäß obigen i) entnommenen Recyclierungsstrom ersetzt,

unter Desorptionsbedingungen derart, daß sie die Desorption des oder der durchschnittlich adsorbierten Bestandteile ermöglichen,

und man zieht einen Teil des aus der Zone (5) stammenden Stroms ab, der den Extrakt $E_1$ darstellt, der einen Teil des oder der durchschnittlich adsorbierten Bestandteile und einen Teil des Lösungsmittels $S_1$, das man abtrennt, umfaßt;

l) man läßt in der Zone (4) den Rest des aus der Zone (5) stammenden Stroms unter Desorptionsbedingungen derart zirkulieren, daß sie die Desorption des oder der am wenigsten adsorbierten Bestandteile und die Adsorption des oder der im Durchschnitt adsorbierten Bestandteile gestatten;

m) man nimmt eine neue Periode in Angriff, indem man synchron durch die Sorptionsmittelkolonne(n) in Strömungsrichtung des Gemisches den Eingang dieses Gemisches, den Austritt des Raffinats R, den Eintritt des starken Lösungsmittels $S_2$, den Austritt des Extrakts $E_2$, den Eintritt des schwachen Lösungsmittels $S_1$, den Austritt des Extrakts E1 und den Austritt des Recyclierungsstroms derart bewegen läßt, daß die Zonen (2), (3), (4), (5) und (6) in der oder den Sorptionsmittelkolonne(n) verschoben werden und die drei gesuchten Fraktionen erzeugt werden.

2. Verfahren nach Anspruch 1, bei dem das sogenannte starke Lösungsmittel bei einer um wenigstens 10°C höheren Temperatur und vorzugsweise bei einer 20 bis 50°C höheren Temperatur als der des gleichen sogenannten schwachen Lösungsmittels verwendet wird.

3. Verfahren nach Anspruch 1, bei dem das sogenannte starke Lösungsmittel $S_2$ bei einem Druck verwendet wird, der um wenigstens 1 MPa größer und vorzugsweise um 2 bis 20 MPa größer als der des gleichen schwachen Lösungsmittels ist.

4. Verfahren nach Anspruch 1, bei dem das starke Lösungsmittel $S_2$ in die Zone (6) im überkritischen Zustand eingeführt wird.

5. Verfahren nach Anspruch 1, bei dem die Adsorptionsbedingungen und die Desorptionsbedingungen die Speise- und Abzugsmengen derart umfassen, daß die Eluierungsfronten sich in den unterschiedlichen Zonen von der Anströmseite gegen die Abströmseite der Kolonne bei im wesentlichen der gleichen Geschwindigkeit verschieben.

6. Verfahren nach Anspruch 1, bei dem die Lösungsmittel $S_1$ und $S_2$ sich durch die Temperatur unterscheiden und bei dem man:

a) die Zone (6) während einer ersten Stufe mit einem Durchsatz $d_3 = d_1 + d_2$ speist, wobei $d_1$ die Menge des aus der Zone (2) stammenden Recyclierungstrom und $d_2$ die Speisemenge mit starkem Lösungsmittel $S_2$ sind, dann während einer zweiten Stufe mit einem Durchsatz $d_3$ starken Lösungsmittels $S_2$ identisch dem Durchsatz während der ersten Stufe speist und man während der ersten Stufe das schwache Lösungsmittel gewinnt, das man in einen Speicherbehälter schickt und während einer zweiten Stufe man den Extrakt $E_2$ mit starkem Lösungsmittel rückgewinnt, das man derart abtrennt, daß man den oder die am stärksten adsorbierten Bestandteile erhält;

b) man speist die Zone (5) während einer ersten Stufe mit einem Durchsatz $d_5$, derart, daß $d_5 < d_3$ wenigstens eines Teils des schwachen Lösungsmittels, das aus dem oben genannten Speicher stammt und während der zweiten Stufe man die Zone (5) mit einem Durchsatz $d_1$ an Recyclierungsstrom speist, der aus der Zone (2) stammt und mit einem Durchsatz $d_4$, derart, daß $d_4 = d_5 - d_1$ des verbleibenden Teils des schwachen Lösungsmittels speist, der aus dem Speicherbehälter stammt, dann gegebenenfalls zusätzlichen schwachen Lösungsmittels und man den Extrakt $E_1$ bei schwachem Lösungsmittel mit einem Durchsatz $d_6$ gewinnt, derart, daß $d_6 < d_5$, den man abtrennt, derart, daß man den oder die durchschnittlich adsorbierten Bestandteil(e) erhält;

c) man speist die Zone (4) mit dem verbleibenden Teil des aus der Zone (5) stammenden Stroms mit einem Durchsatz gleich $d_5 - d_6$ derart, daß man am Austritt einen aus der Zone (4) gleichen Durchsatzes stammenden Strom erhält;

d) man speist die Zone (3) mit diesem Gemisch bei einem Durchsatz $d_7$ und mit diesem aus der Zone (4) stammenden Strom mit dem Durchsatz $d_5 - d_6$, das ist ein Gesamtdurchsatz $d_5 - d_6 + d_7$, und man gewinnt bei einem Durchsatz $d_8$ wenigstens einen Teil des Raffinats bei schwachem Lösungsmittel, das man derart abtrennt, daß man den oder die am wenigsten adsorbierten Bestandteile erhält, wobei der

Durchsatz $d_8$ derart ist, daß $d_8 + d_6 = d_4 + d_7$ ist,

e) man speist die Zone (2) mit dem verbleibenden aus der Zone (3) stammenden Teil mit einem Durchsatz gleich $d_5 - d_6 + d_7 - d_8$ oder $d_1$ und man gewinnt bei einem Durchsatz $d_1$ den Recyclierungsstrom, um die Zone (6), dann die Zone (5), wie in den Stufen a) und b) erwähnt, zu speisen.

7. Verfahren nach Anspruch 1, bei dem in der Variante $k_1$) man während einer Zwischenstufe schwaches Lösungsmittel allein zirkulieren läßt, bevor man den Recyclierungsstrom einsetzt.

8. Vorrichtung zur kontinuierlichen Trennung der fluiden Phase eines Gemisches aus wenigstens drei Bestandteilen in drei Fraktionen, dadurch gekennzeichnet, daß sie in Kombination umfaßt: wenigstens eine Trennkolonne, die fünf aneinander angrenzende Zonen umfaßt, von denen jede wenigstens einen zylindrischen, mit einem Sorptionsmittel gefüllten Abschnitt umfaßt, wobei jeder Abschnitt von im wesentlichen identischem Volumen ist und einen Eintritt und einen Austritt hat, wobei der Austritt eines Abschnittes mit dem Eintritt des folgenden Abschnittes durch eine Verbindung 100 verbunden ist, die für die Zirkulation des Fluids in einer bestimmten Richtung dank Rückschlageinrichtungen (34) eingerichtet ist, die mit dieser Verbindung verbunden sind, wobei der Eintritt jedes Abschnittes hinter diesen Rückschlagsmitteln Mittel zur Speisung (38) mit Gemisch, Mittel (36) zur Speisung mit Lösungsmittel $S_1$, ein sogenanntes schwaches Lösungsmittel umfaßt, umfassend entweder Kühlmittel (46), die mit einer Lösungsmittelspeisung verbunden sind oder erste Druckbeaufschlagungsmittel, die mit einer Lösungsmittelspeisung verbunden sind sowie Mittel (37) zur Speisung mit sogenanntem starken Lösungsmittel $S_2$ umfassend entweder Heizmittel (45), die mit einer Speisung mit dem gleichen Lösungsmittel verbunden sind oder zweite Druckbeaufschlagungsmittel, die mit einer Speisung mit dem gleichen Lösungmittel verbunden sind, wobei diese ersten Druckbeaufschlagungsmittel so ausgebildet sind, daß sie einen geringeren Druck als den liefern, den man durch die zweiten Druckbeaufschlagungsmittel erhalten hat, wobei der Ausgang jedes Abschnittes vor den Rückschlagmitteln Mittel (31) für einen Extrakt $E_1$ mit dem Lösungsmittel $S_1$ umfaßt, Abzugsmittel (30) für einen Extrakt $E_2$ mit dem Lösungsmittel $S_2$, Mittel (32) zum Abziehen eines Raffinats R mit dem Lösungsmittel $S_1$ und Mittel (33) zum Abziehen eines Recyclierungsstroms sowie Mittel, die die Recyclierung sicherstellen, wobei die Gesamtheit dieser Speisungs- und Abzugsmittel derart ausgebildet ist, daß

- eine fünfte Zone (6) durch einen Eingang, der mit den Speisungsmitteln mit Lösungsmittel $S_2$ und durch einen Ausgang begrenzt ist, der mit den Abzugsmitteln mit Extrakt $E_2$ bei starkem Lösungsmittel verbunden ist;
- eine vierte Zone (5) in Strömungsmittelrichtung unmittelbar hinter der fünften Zone durch einen Eintritt begrenzt ist, der mit den Mitteln zur Speisung mit dem sogenannten schwachen Lösungsmittel $S_1$ und durch einen Ausgang begrenzt ist, der mit den Abzugsmitteln mit dem Extrakt $E_1$ beim schwachem Lösungsmittel verbunden ist;
- eine dritte Zone (4) in Strömungsrichtung unmittelbar hinter der vierten Zone durch einen Eingang, der mit dem Austritt der vierten Zone und durch einen vierten Ausgang begrenzt ist, der mit den Mitteln zum Speisen mit dem Gemisch verbunden ist;
- eine zweite Zone (3) in Strömungsrichtung unmittelbar hinter der dritten Zone durch einen Eingang, der mit dem Austritt der dritten Zone (4) verbunden ist und einen Ausgang begrenzt ist, der mit den Abzugsmitteln für das Raffinat R bei schwachem Lösungsmittel verbunden ist;
- eine erste Zone (2) in Strömungsrichtung unmittelbar hinter der zweiten Zone, die durch einen Eingang, der mit dem Ausgang der zweiten Zone verbunden ist und einen Ausgang begrenzt ist, der mit den Abzugsmitteln mit Recyclierungsstrom verbunden ist,

wobei die Vorrichtung im übrigen aufweist:

- Mittel zur aufeinanderfolgenden Fortbewegung in Richtung der Fluidzirkulation eines Teils der Abzugsmittel des Extraktes $E_1$, des Extraktes $E_2$, des Raffinats R sowie des Recyclierungsstroms sowie Mittel, die die Zirkulation sicherstellen und andererseits Mittel zur Speisung mit dem Lösungsmittel $S_1$, dem Lösungsmittel $S_2$ und mit Gemisch, wobei diese Mittel so ausgelegt sind, daß sie Bedingungen des sogenannten simulierten Gegenstroms realisieren, wobei die Vorrichtung im übrigen so ausgelegte Mittel umfaßt, daß der Ausgang der ersten Zone (2) alternativ mit dem Eingang der fünften Zone (6), dann mit dem Eingang der vierten Zone (5) verbunden wird und auch so ausgelegte Mittel umfaßt, daß der Ausgang der fünften Zone entweder zunächst mit dem Eingang der vierten Zone (5), dann mit den Abzugsmitteln des Extraktes $E_2$ bei starkem Lösungsmittel oder direkt mit den Abzugsmitteln für den Extrakt $E_2$ bei starkem Lösungsmittel verbunden ist, wobei die Vorrichtung schließlich auf der Verbindung 100 entweder die alleinigen Rückschlagmittel (34), die die Zirkulation des Fluids von der Zone (5) gegen die Zone (6) unterbinden oder diese Mittel plus Zirkulationsmittel (52, 54) für die Differenz des Druckes zwischen den Zonen (6) und (5) umfaßt.

9. Vorrichtung nach Anspruch 8, dadurch gekennzeichnet, daß sie Durchsatzsteuermittel umfaßt, die mit den Speisemitteln und den Abzugsmittel verbunden und so ausgelegt sind, daß sie die Eluierungsfronten in den unterschiedlichen Zonen bei der gleichen Geschwindigkeit verschieben.

10. Vorrichtung nach einem der Ansprüche 8 und 9, dadurch gekennzeichnet, daß die Mittel zum Speisen mit Lösungsmittel $S_1$, mit Lösungsmittel $S_2$ und mit Gemisch (38) sowie die Mittel zum Abzug an Extrakt $E_2$, an Extrakt $E_1$ und an Raffinat (32) und an Recyclierungsstrom (33) jeweils ein Ventil einer Ausbildung haben, das alternativ jeder dieser Ströme mit sämtlichen Abschnitten in Verbindung gesetzt wird.

11. Vorrichtung nach Anspruch 10, bei dem die Steuermittel für die Druckdifferenz ein Ventil einer Ausbildung mit Zirkulation in Reihe zwischen je zwei aufeinanderfolgenden Abschnitten außer zweien sowie eine Differentialdrucksteuerung zwischen zwei aufeinanderfolgenden Abschnitten haben, wobei dieses Ventil in Reihe mit dieser Verbindung gelegt ist.

12. Anwendung des Verfahrens nach einem der Ansprüche 1 bis 7 oder der Vorrichtung nach einem der Ansprüche 8 bis 11 bei einem Verfahren zum Reinigen von Phenol, Orthokresol und Toluol enthaltenden Wassern, bei einem Verfahren zum Trennen eines Gemisches, das Xylose, Arabinose und Fructose oder Glucose enthält, bei einem Verfahren zur Trennung eines Gemisches von Ethylbenzol, von Paraxylol, von Orthoxylol, von Metaxylol und bei Verfahren zur Herstellung von Aromaten und essentiellen Ölen.

**FIG.1**

# FIG.2

EP 0 415 822 B1

**FIG.3**

25

**FIG.4**

FIG.5

**FIG.6**